# FASCICULE DE BREVET EUROPEEN

(11) **EP 0 600 796 B1**
(45) Date de publication et mention de la délivrance du brevet: **10.09.1997**
(21) Numéro de dépôt: 93402921.6
(22) Date de dépôt: 02.12.1993
(51) Int. Cl.: G01S 5/14

(54) **Procédé de radionavigation et système de gestion de flotte de véhicules**
Funkortungs-Verfahren und Management-System für eine Flotte von Fahrzeugen
Radio navigation method and management system for a fleet of vehicles

(30) Priorité: 04.12.1992 FR 9214644
(43) Date de publication de la demande: 08.06.1994
(73) Titulaire: DASSAULT SERCEL Navigation-Positionnement, 44470 Carquefou (FR)
(72) Inventeur: Rabian, Jean Marcel, F-44980 Sainte Luce (FR); Potet, Jean Claude, F-44240 Suce Sur Erdre (FR); Guichet, Henri Pierre, F-44690 La Haye Fouassiere (FR)
(74) Mandataire: Martin, Jean-Jacques

(56) Documents cités:
- EP-A- 0 501 828
- DE-A- 3 933 968
- FR-A- 2 248 517

## Description

La présente invention concerne le domaine de la radionavigation.

On a déjà proposé de nombreux systèmes de radionavigation.

Le document FR-A-2248517 décrit en particulier, un système de radionavigation qui exploite un procédé comprenant les étapes qui consistent à :
- au niveau d'un émetteur, rayonner un train d'ondes de haute fréquence comprenant un signal sinusoïdal modulé par inversion de phase selon un premier enchainement répétitif d'une séquence pseudo-aléatoire connue, définissant une première base de temps, et
- au niveau d'un récepteur, recevoir le train d'ondes de haute fréquence et le démoduler par corrélation du premier enchainement répétitif de la séquence pseudo-aléatoire connue, qui est reçu, porté par le train d'ondes de haute fréquence, avec un second enchainement répétitif local, d'une séquence pseudo-aléatoire, ledit second enchainement répétitif étant décalé dans le temps jusqu'à ce qu'il coïncide avec le premier enchainement répétitif reçu et définissant ainsi une seconde base de temps liée au temps de propagation de l'onde électromagnétique de l'émetteur au récepteur, donc à la distance de l'émetteur au récepteur.

Plus précisément, le document FR-A-2248517 précité propose deux variantes : l'une qui conduit à une détermination de position de type circulaire, l'autre qui conduit à une détermination de position de type hyperbolique.

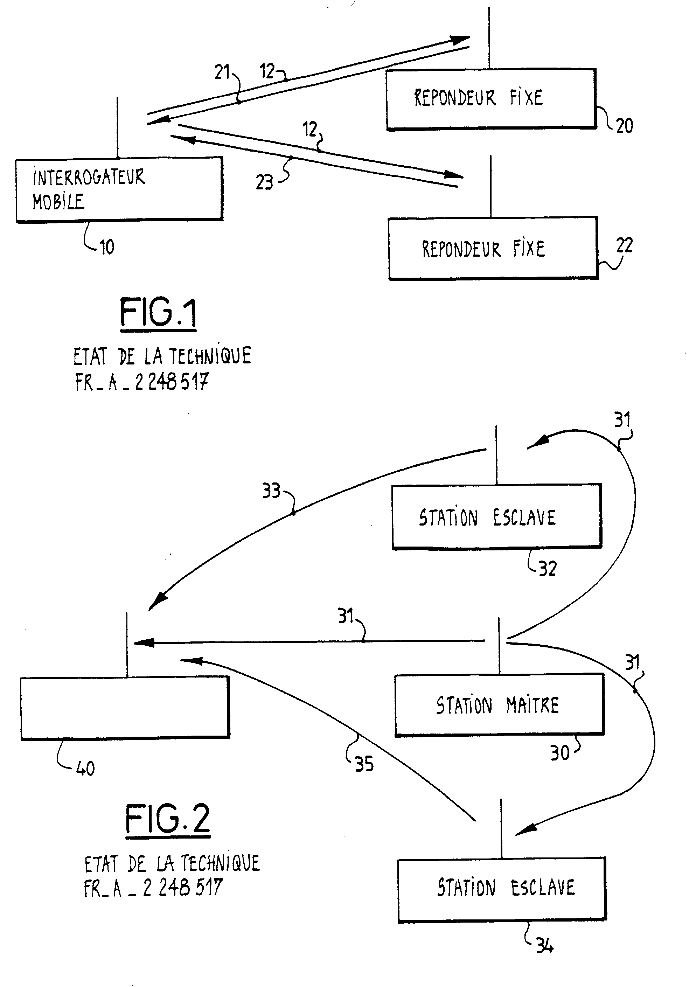

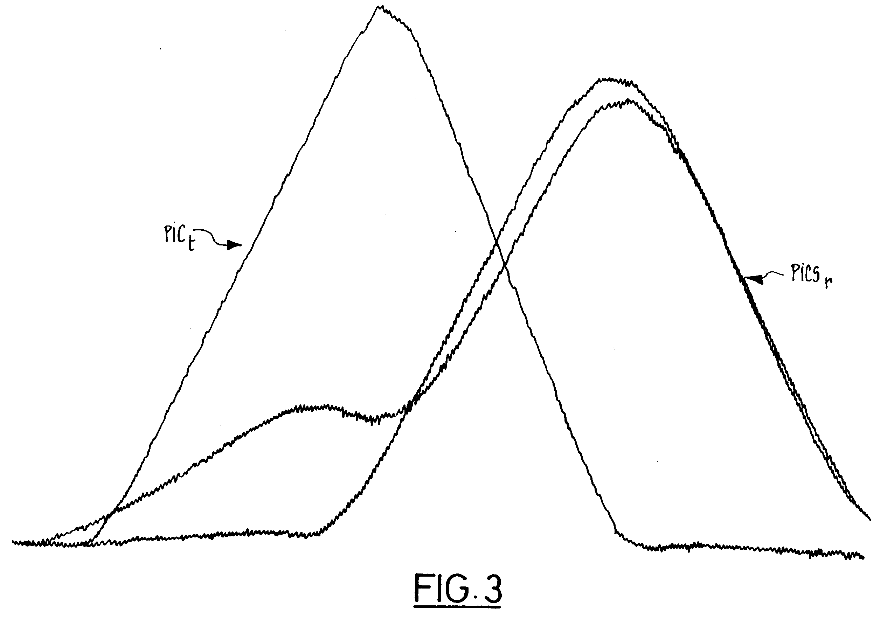

Ces deux variantes de mise en oeuvre sont représentées schématiquement respectivement sur les figures 1 et 2 annexées.

Le système représenté schématiquement sur la figure 1 comprend un interrogateur mobile 10 et au moins deux répondeurs fixes 20, 22. Les échanges de signaux entre les différents éléments de ce système sont cadencés par une trame temporelle pré-établie. L'interrogateur 10 rayonne une séquence pseudo-aléatoire 12 de façon répétitive au cours d'une plage temporelle qui lui est réservée périodiquement. Chaque répondeur fixe 20, 22 se synchronise alors sur la séquence pseudo-aléatoire 12 reçue et émet ensuite successivement, au cours de plages temporelles périodiques respectivement attribuées, des séquences pseudo-aléatoires locales synchronisées sur la séquence reçue de l'interrogateur mobile 10. Les émissions provenant des répondeurs fixes 20, 22 sont référencées schématiquement 21 et 23 sur la figure 1 annexée. Le décalage entre la séquence pseudo-aléatoire initiale émise par l'interrogateur mobile 10 et les séquences 21, 23 reçues en provenance des répondeurs 20, 22 est lié au double de la distance séparant l'interrogateur mobile 10 respectivement de chaque répondeur fixe 20, 22. Le système représenté sur la figure 1 correspond par conséquent à une détermination de position de type circulaire.

Le système conforme au document FR-A-2248517, représenté sur la figure 2 annexée, comprend une station maître 30, au moins une station esclave, de préférence au moins deux stations esclaves 32, 34 sous la dépendance de la station maître 30, et un récepteur 40 placé sur un véhicule à positionner. Là encore, les échanges de signaux entre les différents éléments du système sont cadencés par une trame temporelle pré-étabie. La station maître 30 rayonne, au cours de plages temporelles périodiques qui lui sont réservées, une séquence pseudo-aléatoire de base 31. Les stations esclaves 32, 34 synchronisent leur séquence pseudo-aléatoire locale sur la séquence reçue de la station maître 30 et ré-émettent leur propre séquence pseudo-aléatoire locale. Le récepteur 40 placé sur le véhicule à positionner reçoit par conséquent la séquence pseudo-aléatoire 31 issue directement de la station maître 30 et les séquences pseudo-aléatoires 33, 35 générées par chaque station exclave 32, 34. Le récepteur 40 recherche une coïncidence entre des séquences pseudo-aléatoires locales et les séquences reçues en provenance de la station maître 30 et des stations esclaves 32, 34. Le récepteur 40 fournit par conséquent des différences de distances entre d'une part, le récepteur 40 et la station maître 30, d'autre part et respectivement, le récepteur 40 et les stations esclaves 32, 34. Le système représenté schématiquement sur la figure 2 conduit par conséquent à un positionnement sur des lignes hyperboliques.

On comprend que le mode circulaire représenté sur la figure 1 est saturable. En d'autres termes, le nombre de véhicules ou d'interrogateurs mobiles 10 susceptibles de travailler dans un réseau de répondeurs fixes 20,22 est limité. En revanche, le nombre de véhicules susceptibles d'être équipés d'un récepteur 40, dans le cadre d'un système de positionnement hyperbolique, comme représenté sur la figure 2, est en théorie illimité.

Plus précisément, selon l'enseignement du document FR-A-2248517, la synchronisation entre la séquence pseudo-aléatoire reçue et la séquence pseudo-aléatoire locale, permettant une mesure temporelle liée à la distance parcourue par le rayonnement, est effectuée par recherche du maximum du pic de la fonction de corrélation. Cette recherche est opérée à l'aide d'un asservissement de type symétrique. En effet, en théorie, si T est la durée de l'élément binaire de base composant la séquence pseudo-aléatoire, la fonction de corrélation admet un pic pour un écart entre séquence locale et séquence reçue compris entre -T et +T. En d'autres termes le pied du pic de corrélation a une durée de deux éléments binaires composant la séquence pseudo-aléatoire. Toujours, selon l'enseignement du document FR-A-2248517, dès que le synchronisme est obtenu à plus ou moins T près, le système entre dans une phase de poursuite de synchronisme pilotée par un signal différentiel, qui au contraire s'annule de façon stable lorsque la séquence locale est rigoureusement synchrone de la séquence reçue.

En réalité, comme le montre la figure 3 ci-jointe, le pic de la fonction de corrélation obtenue n'est pas toujours aussi pur que l'on pourrait le souhaiter. Sur la figure 3 on a ainsi représenté sous la référence picₜ un pic théorique de la fonction de corrélation et sous la référence picsᵣ des pics réels constatés expérimentalement.

En particulier, en milieu urbain, les différentes réflexions des rayonnements modulés par une séquence pseudo-aléatoire conduisent à un signal de corrélation très parasité. Le calage sur un maximum qui ne correspond pas au maximum de la fonction de corrélation liée au rayonnement direct conduit à une erreur de position.

La présente invention a pour but essentiel de perfectionner les systèmes de radionavigation existants pour éviter cette difficulté.

Un autre but auxiliaire de la présente invention est de perfectionner les systèmes de radionavigation existants pour permettre la gestion d'une flotte de véhicules par exploitation d'un système de radionavigation.

Dans le cadre de la présente invention, on entend par "véhicule", tout type de mobile, terrain ou maritime, voir le cas échéant aérien.

La présente invention s'applique en particulier de préférence à la gestion de flottes de véhicules se déplaçant en milieu urbain.

Par "gestion" on entend la localisation de chaque véhicule dans un repère de référence, la délivrance à chaque véhicule de son information localisation, le regroupement au niveau d'au moins un poste central de l'ensemble des informations de localisation des différents véhicules, additionnées de préférence d'informations supplémentaires relatives aux mouvements et à l'état de chaque véhicule.

Le poste central peut ainsi exploiter les informations de localisation réunies à diverses fins, par exemple à des fins de sécurité, pour éviter la collision entre les différents véhicules, ou encore en vue d'une exploitation optimum du déplacement des véhicules, afin de minimiser les trajets de ceux-ci pour effectuer des fonctions requises, etc ...

La Demanderesse a commercialisé depuis de nombreuses années des systèmes conformes à l'enseignement du brevet FR-A-2248517, sous la dénomination "SYLEDIS".

La Demanderesse a par ailleurs proposé déjà diverses évolutions du système de radionavigation de base connues sous la dénomination SYLEDIS. Certaines de ces évolutions sont par exemple commercialisées sous les dénominations SYLECHART, pour l'acquisition et le traitement de données hydrographiques, SYLEDREDGE pour le positionnement des navires de dragage et l'exploitation des données de sondage, ou encore SYLEPORT pour l'assistance dans le pilotage de navires en zone portuaire.

La Demanderesse a par ailleurs proposé, dans le document NAVIGATION, volume 38, n° 150, Avril 1990, pages 201 à 217, une autre évolution du système SYLEDIS de base. Ce document décrit une tentative d'adaptation du système SYLEDIS connu à la localisation très précise de véhicules en zone urbaine. L'ensemble décrit dans ce document comprend un système SYLEDIS classique conforme à la figure 2 annexée comportant une station maître et quatre stations esclaves à poste fixe, formant balises de référence, et un récepteur embarqué sur le véhicule à localiser. En outre, l'ensemble décrit dans ce document comprend un boîtier d'interface embarqué sur le véhicule et regroupant les informations de position issues du récepteur SYLEDIS, une information vitesse délivrée par un tachymètre et une information vitesse angulaire provenant d'un gyromètre. Enfin, l'ensemble décrit dans le document précité comprend, embarqués sur le véhicule, un calculateur de type PC permettant un calcul de position du véhicule en temps réel à l'aide des trois informations indiquées ci-dessus provenant du boîtier d'interface, et un traceur graphique permettant de présenter en temps réel la trajectoire du véhicule sur une carte.

Les essais relatés par ce document, ont permis un positionnement de véhicules, en milieu urbain, relativement satisfaisant. Toutefois, comme le relate ce document, ces essais ont mis en évidence certaines difficultés propres à l'environnement général d'un centre urbain qui entraîne par les nombreuses réflexions sur les différents obstacles, des réceptions d'ondes ayant subi des trajets multiples qui viennent se superposer avec la réception des ondes issues des trajets les plus directs, seules interressantes pour une mesure de distance. Pour tenter d'atténuer les effets de ces échos perturbateurs, il a été proposé dans le document précité, de procéder, grâce à une redondance obtenue sur les informations de distance, à une analyse de la cohérence des signaux et des distances observés et à un examen de la vraisemblance des figures d'intersection des lignes de position, pour éliminer certaines mesures discordantes.

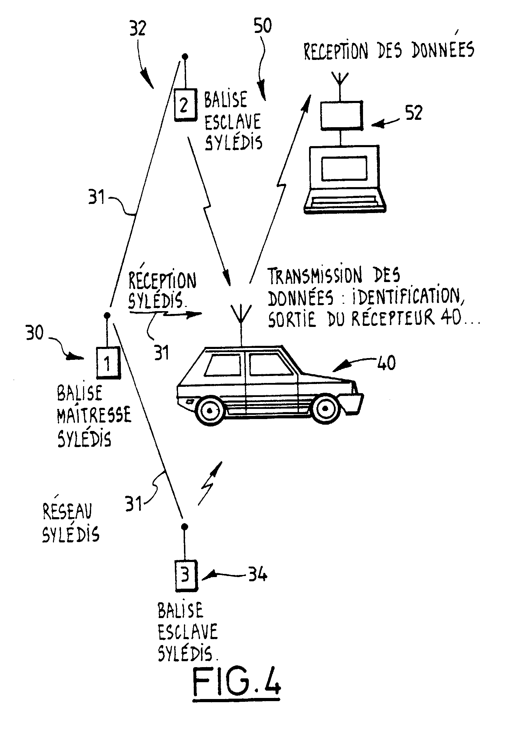

La Demanderesse a envisagé une autre évolution de l'ensemble décrit dans le document NAVIGATION précité, laquelle évolution est illustrée schématiquement sur la figure 4 ci-jointe.

On retrouve sur la figure 4 annexée, une station maître 30 et au moins deux stations esclaves 32, 34, ainsi qu'un récepteur 40 embarqué sur véhicule, conformes à la figure 2 précitée. Toutefois, on aperçoit également schématisé sur la figure 4 ci-jointe un ensemble 50 additionnel de transmission UHF en temps réel des données obtenues sur le véhicule, au niveau du récepteur 40, vers un centre de contrôle 52 permettant de visualiser les déplacements du mobile. Un tel système donne à priori satisfaction pour le suivi d'un véhicule unique ou un nombre limité de véhicules. Il semble toutefois difficilement envisageable pour la gestion d'une flotte importante de véhicules, , compte-tenu notamment de la complexité des messages devant être transmis du véhicule vers le centre de contrôle 52, en particulier pour l'identification de chaque véhicule.

De nombreux autres systèmes de radionavigation ont également été proposés.

Certains de ces systèmes sont connus sous le nom de SYSTEME NAVSTAR/GPS ou OMEGA. Ces systèmes bien connus de l'homme de l'art ne seront pas décrits dans le détail par la suite.

On notera toutefois que ces systèmes bien qu'ayant déjà rendu de grands services, ne donnent pas toujours satisfaction, en particulier en milieu urbain. Leur couverture et leur précision ne sont pas toujours satisfaisantes. De plus, pour les systèmes exploitant des satellites à défilement, la géométrie sous laquelle on voit les satellites est par nature changeante. La précision obtenue en un lieu donné à un instant donné n'est donc pas reproductible, au même lieu, à un autre instant.

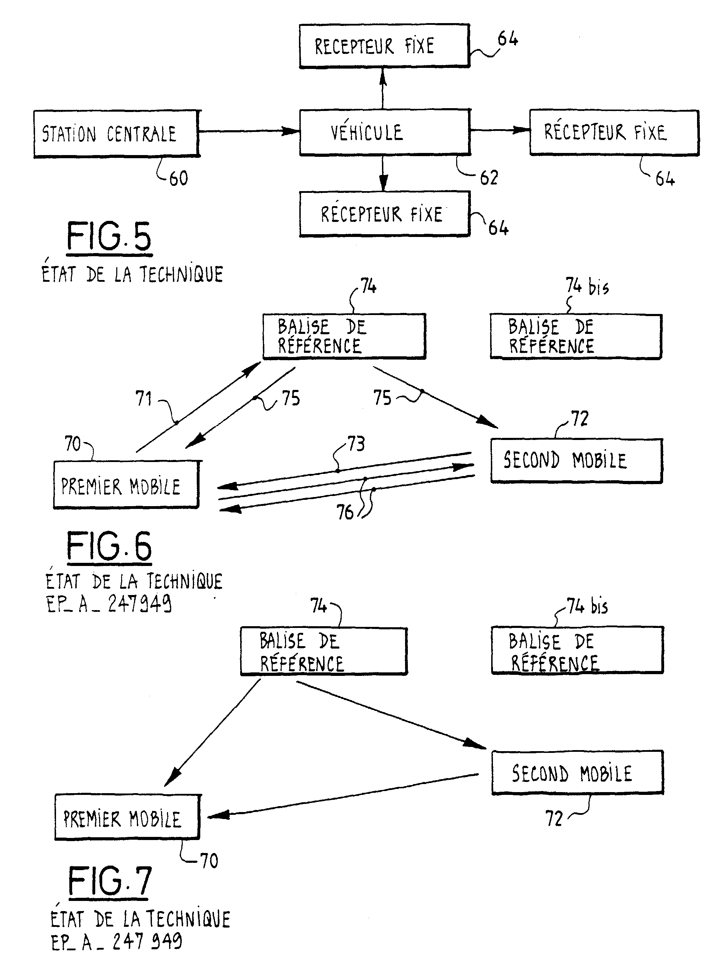

Comme représenté sur la figure 5 annexée, on a également proposé dans les Techniques de l'Ingénieur 1973, rubrique E3422, un ensemble de localisation d'un mobile en zone urbaine comprenant un émetteur situé au niveau d'une station centrale 60 et qui envoie des impulsions périodiques de courte durée, par exemple d'une micro-seconde toutes les dix secondes, des ensembles émetteur/récepteur 62 embarqués respectivement sur chaque véhicule et adaptés pour répondre à l'émetteur 60 au bout d'un temps qui leur est propre, et des récepteurs fixes 64 recevant les signaux émis par les ensembles émetteur/récepteur embarqués 62. Chaque véhicule 62 possède une tranche de retard de temps qui lui est attribuée, d'une durée de 1 milliseconde par exemple. Les différences de temps de réception entre chaque paire de récepteurs fixes 64 fournissent la position du mobile 62 par intersection de branches d'hyperboles ayant pour foyer les paires de récepteurs considérés. En résumé, ce document décrit un procédé de radio-localisation par détermination de positions hyperboliques et identification des véhicules par le retard de la réponse par rapport à l'interrogation.

Le document EP-A-0247949 décrit un autre système adapté pour la localisation et la correction d'orientation d'un objet mobile autonome et d'un objet mobile non autonome. Le système décrit dans ce document s'applique en particulier à la localisation d'une bouée de queue de cable de prospection par rapport au bateau tracteur. Ce document décrit plus précisément deux variantes de systèmes respectivement à positionnement circulaire et positionnement hyperbolique. Le système de radio-navigation décrit dans ce document comprend un réseau de sources balises de référence coopérant avec le premier et le deuxième objets mobiles, un premier moyen d'intercommunication entre le premier objet mobile et les sources balises de référence, un deuxième moyen d'intercommunication entre le premier et le deuxième objets mobiles et enfin un troisième moyen d'intercommunication entre chaque source balise de référence et le deuxième objet mobile.

On a représenté sur la figure 6 annexée, la variante de système à détermination de type circulaire décrite dans le document EP-A-0247949.

On retrouve sur la figure 6 le premier mobile 70, le second mobile 72 et deux sources balise de référence 74, 74bis. Pour simplifier l'illustration sur la figure 6, on a représenté uniquement les intercommunications avec la balise de référence 74. Les intercommunications avec la balise de référence 74bis et toute balise de référence additionnelle éventuellement prévue, sont identiques.

Le premier mobile 70 comprend un interrogateur mobile conforme à l'interrogateur 10 représenté sur la figure 1. Les balises de référence 74 sont équipées chacune d'un répondeur tel que les répondeurs 20, 22 représentés sur la figure 1. Il en est de même pour le second mobile 72. Ainsi, après émission d'une séquence pseudo-aléatoire 71 par le premier mobile 70, les balises de référence se synchronisent sur cette séquence reçue et ré-émettent leur séquence pseudo-aléatoire locale synchronisée référencée 75 sur la figure 6, tant en direction du premier mobile 70 que du second mobile 72. La séquence 75 reçue par le premier mobile 70 en provenance de la balise de référence 74 permet de connaître la distance séparant le premier mobile 70 de cette même balise de référence 74 et permet donc un positionnement de type circulaire du premier mobile 70. A réception de la séquence pseudo-aléatoire 75 provenant de la balise de référence 74, le second mobile 72 synchronise sa propre séquence pseudo-aléatoire locale et ré-émet celle-ci, sous la référence 73, en direction du premier mobile 70. Le premier mobile 70 reçoit ainsi une information représentative de la somme des distances séparant la balise de référence 74 et le second mobile 72 d'une part, et le second mobile 72 et le premier mobile 70 d'autre part. Par ailleurs, les moyens d'intercommunication 76 prévus entre le premier mobile 70 et le second mobile 72, qui sont avantageusement conformes à ceux représentés sur la figure 1 (interrogateur sur le premier mobile 70 et répondeur sur le second mobile 72), permettent de connaître la distance séparant le premier mobile 70 du second mobile 72. En retranchant, cette information de celle déduite de la séquence 73 reçue en provenance du second mobile 72, le premier mobile 70 peut connaître la distance séparant le second mobile 72 de chaque balise de référence 74 et par conséquent positionner celui-ci par détermination de position de type circulaire.

On a par ailleurs représenté sur la figure 7 annexée, une variante de réalisation mettant en oeuvre une détermination de type hyperbolique décrite dans le document EP-A-0247949 précité. Là encore, on retrouve sur la figure 7 un premier mobile 70, un second mobile 72 et des balises de référence 74, 74bis. Seules les intercommunications avec la balise de référence 74 sont représentées sur la figure 7 pour simplifier l'illustration. Les balises de référence 74 comprennent une station maître et des stations esclaves qui génèrent cycliquement leur séquence pseudo-aléatoire en direction du premier mobile 70 et du second mobile 72. Le second mobile 72 comprend un répondeur du type représenté sur la figure 1, afin de ré-émettre en direction du premier mobile 70 sa séquence pseudo-aléatoire locale, après réception de la séquence reçue d'une balise de référence 74 et synchronisation sur celle-ci. Le premier mobile 70 dispose ainsi, en provenance directe des balises de référence 74, d'informations permettant son positionnement sur des lignes de type hyperbolique, et de façon similaire, en provenance du second mobile 72, d'informations permettant la détermination de position de ce dernier sur des lignes de type hyperbolique.

On a également proposé dans le document US-A-3774215, comme représenté sur la figure 8 annexée, un ensemble de radionavigation basé sur le système OMEGA. Les système décrit dans ce document comprend un ensemble de balises OMEGA classiques 80, un récepteur OMEGA embarqué sur chaque véhicule 82, un moyen de communication entre ledit véhicule 82 et l'une choisie d'un réseau de stations fixes 84, pour la communication à celle-ci d'une information représentative de la différence de phase détectée sur le récepteur OMEGA embarqué, et un poste central de calcul 86 relié au réseau de stations fixes 84, adapté pour calculer la position de chaque véhicule 82 à partir des informations ainsi reçues. Le système décrit dans ce document s'avère fort complexe. Tout d'abord, lorsque le véhicule 82 doit connaître lui-même sa position, il est nécessaire de retransmettre cette position calculée au niveau du poste central 86 en direction du véhicule 82. Ensuite, l'ensemble décrit dans ce document fonctionne en temps partagé et exige un système d'interrogation/réponse des véhicules 82, par chaque station 84, afin de gérer les conflits entre les différents véhicules. Le système d'interrogation/réponse proposé dans ce document, est tel que les véhicules 82 répondent aux stations 84 et adressent à celles-ci les signaux représentatifs de la différence de phase détectée dans un ordre lié à leur distance de la station considérée. La gestion des informations est de ce fait fort compliquée.

Le document DE-A-3933968 décrit un récepteur pour GPS qui comprend des moyens aptes à générer une série d'enchaînements répétitifs locaux décalés d'1/2 bit, une série de portes OU exclusif aptes à comparer la phase d'un enchaînement répétitif reçu et celle respectivement de chaque enchaînement répétitif local, des moyens aptes à générer deux signaux logiques déphasés de 90°, une seconde série de portes OU exclusif aptes à comparer la phase des signaux issus de chaque porte de la première série avec respectivement celle desdits signaux logiques, des moyens aptes à compter des signaux d'horloge pendant les périodes de niveau haut des signaux issus de chaque porte de la seconde série respectivement, des moyens pour rechercher un maximum dans la somme des comptes obtenus sur la base des sorties de deux portes de la seconde série correspondant à une même porte de la première série, et des moyens pour décaler les enchaînements répétitifs locaux de n/2 bits si un maximum recherché n'est pas atteint.

En conclusion, il s'avère que de nombreux systèmes de radionavigation ont déjà été proposés. Toutefois, aucun des systèmes connus ne donnent pleinement satisfaction.

La présente invention a pour but principal de proposer de nouveaux moyens qui permettent d'améliorer le positionnement de véhicules en milieu urbain.

Un but auxiliaire de la présente invention est de proposer de nouveaux moyens permettant d'améliorer la gestion d'une flotte de véhicules, en particulier au niveau de la disponibilité du signal, de la quantité de véhicules suivis, de la cadence de renouvellement de leur information de position, de la précision et du coût.

Les buts précités sont atteints, dans le cadre de la présente invention, grâce à un procédé tel que défini en revendication 1 annexée.

Selon une autre caractéristique avantageuse, le procédé de l'invention comprend les étapes qui consistent à :
- au niveau d'un émetteur, rayonner un train d'ondes de haute fréquence comprenant un signal sinusoïdal modulé par inversion de phase selon un premier enchainement répétitif d'une séquence pseudo-aléatoire connue définissant une première base de temps, et
- au niveau d'un récepteur, recevoir le train d'ondes haute fréquence et le démoduler par corrélation du premier enchainement répétitif de la séquence pseudo-aléatoire connue, qui est reçu, porté par le train d'ondes de haute fréquence, avec un second enchainement répétitif local, d'une séquence pseudo-aléatoire, ledit second enchainement répétitif étant décalé dans le temps jusqu'à ce qu'il coïncide avec le premier enchainement répétitif reçu, et définissant ainsi une seconde base de temps liée au temps de propagation de l'onde électromagnétique de l'émetteur au récepteur, donc à la distance de l'émetteur au récepteur,
caractérisé par le fait que la poursuite de coïncidence entre le premier et le second enchainements répétitifs est opérée par mesure d'amplitude multipoints sur la fonction de corrélation afin de déterminer la forme du front avant du pic de corrélation.

Comme on le verra par la suite, le procédé conforme à la présente invention permet de réduire les erreurs de mesure dues aux multiples trajets des ondes dans les zones urbaines.

Selon une autre caractéristique avantageuse de la présente invention, la poursuite de coïncidence est opérée plus précisément en prenant différents niveaux d'une fonction de corrélation distants d'une fraction connue de la durée d'un élément binaire de codage de la séquence pseudo-aléatoire, en décalant la séquence pseudo-aléatoire locale jusqu'à obtention d'une valeur prédéterminée pour une fonction mettant en oeuvre ces différents niveaux et en générant une séquence locale pilote décalée d'une valeur connue par rapport aux niveaux considérés de la fonction de corrélation.

Selon une autre caractéristique avantageuse de la présente invention, le procédé comprend également une étape de recherche grossière de coïncidence par détection du dépassement d'un seuil prédéterminé de bruit par les diverses fonctions de corrélation précitées.

Selon une autre caractéristique avantageuse de la présente invention, la poursuite de coïncidence est obtenue par corrélation du premier enchainement répétitif reçu avec une pluralité de seconds enchainements répétitifs locaux décalés respectivement d'une fraction connue d'un élément binaire de la séquence pseudo-aléatoire, et par décalage des enchainements locaux jusqu'à obtention d'une valeur prédéterminée pour une fonction mettant en oeuvre les niveaux obtenus pour les diverses fonctions de corrélation.

Selon une autre caractéristique, la présente invention concerne également un système de gestion de flotte de véhicules comprenant :
- un système de radionavigation comportant :
   . des balises de référence,
   . des moyens de communication principaux embarqués respectivement sur chaque véhicule coopérant avec les balises de référence, les échanges entre les balises de référence et les moyens de communication principaux étant établis sur la base de créneaux de transmission répondant à une trame temporelle pré-établie, et
   . des moyens de calcul embarqués respectivement sur chaque véhicule et reliés aux moyens de communication principaux associés, lesquels moyens de calcul sont adaptés pour calculer la position du véhicule respectif par rapport aux balises de référence, sur la base des informations issues des moyens de communication principaux,
   caractérisé par le fait qu'il comprend en outre :
- un réseau de stations de réception fixes, et
- des moyens de transmission secondaires embarqués respectivement sur chaque véhicule et adaptés pour transmettre aux stations fixes de réception, l'information représentative de la position du véhicule calculée grâce aux moyens de calcul embarqués, par modulation d'un signal pendant des créneaux de transmission semblables aux créneaux de localisation échangés entre les balises de référence et les moyens de communication principaux et partageant la même trame temporelle et la même bande de fréquence que ceux-ci.

Selon une autre caractéristique avantageuse de la présente invention, la trame temporelle exploitée par les moyens de transmission secondaires et les moyens de communication principaux est synchronisée sur une base de temps propre au système de transmission des balises de référence et des moyens de communication principaux.

En variante, la trame temporelle exploitée par les moyens de transmission secondaires et les moyens de communication principaux peut être synchronisée sur une base de temps externe au système de transmission des balises de référence et des moyens de communication principaux, par exemple sur la base de temps d'un système GPS. Cette variante permet de gérer à l'aide du même système de gestion de flotte, des véhicules équipés de systèmes de localisation différents, par exemple pour les uns un système de localisation SYLEDIS et pour les autres un système de localisation GPS, sous réserve d'équiper chacun de ces véhicules de moyens de transmission secondaires.

Selon une autre caractéristique avantageuse de la présente invention, les moyens de transmission secondaires définissent une transmission unilatérale dans le sens véhicule vers les stations au sol.

Selon une autre caractéristique avantageuse de la présente invention, la fréquence de répétition des émissions par les moyens de transmission secondaires diffère d'un véhicule à l'autre.

D'autres caractéristiques, buts et avantages de la présente invention apparaîtront à la lecture de la description détaillée qui va suivre, et en regard des dessins annexés donnés à titre d'exemple non limitatif et sur lesquels :
- les figures 1 et 2 précédemment décrites illustrent schématiquement deux variantes de réalisation d'un système de radiolocalisation décrit dans le document FR-A-2248517,
- la figure 3 précédemment décrite illustre schématiquement les difficultés spécifiques à la radio-localisation en zone urbaine en montrant plus précisément un pic théorique de corrélation entre une séquence reçue et une séquence locale et différents pics de corrélation réels mesurés en zone urbaine,
- la figure 4 précédemment décrite représente une variante de réalisation d'un système de radiolocalisation envisagé antérieurement par la Demanderesse,

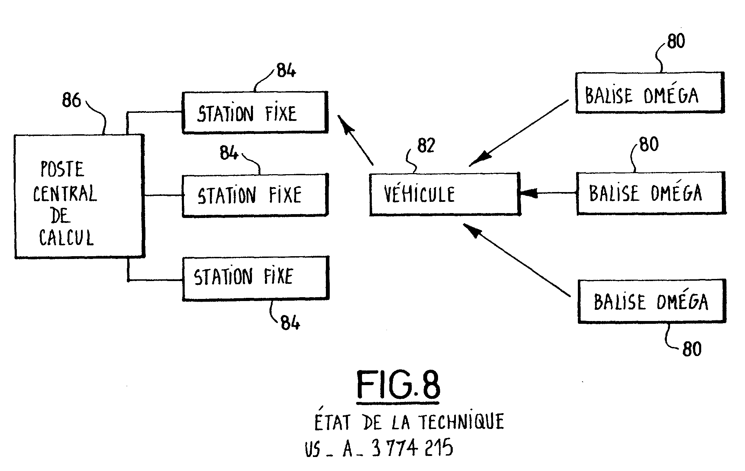

- les figures 5, 6, 7 et 8 précédemment décrites illustrent schématiquement d'autres variantes de réalisation de systèmes de radiolocalisation conformes aux documents TECHNIQUE DE L'INGENIEUR, EP-A-247949 et US-A-3774215,
- la figure 9 représente schématiquement la structure d'un élément mobile conforme à la présente invention,
- la figure 10 représente schématiquement une opération effectuée sur la fonction de corrélation dans le cadre de la présente invention, pour la recherche de coïncidence,
- la figure 11 représente schématiquement une autre opération préférentielle effectuée sur la fonction de corrélation, dans le cadre de la présente invention pour la recherche de coïncidence, et
- la figure 12 représente schématiquement la structure générale d'un système de gestion de flotte conforme à la présente invention.

La présente invention exploite de préférence la structure de base connue décrite dans le document FR-A-2248517.

Pour cette raison, la structure de base du système de radionavigation ne sera pas décrite dans le détail.

Par la suite, on s'attachera essentiellement à décrire les différences distinguant la présente invention du système de radionavigation enseigné par la document FR-A-2248517.

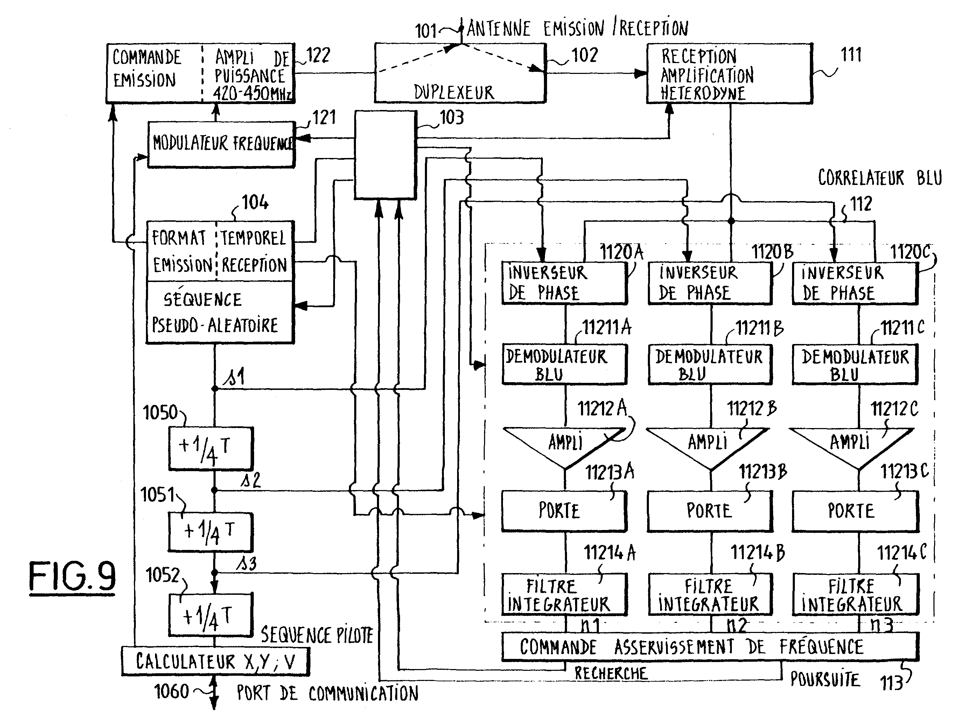

Plus précisément on va tout d'abord décrire les moyens spécifiques à la présente invention conçus pour synchroniser un code local de séquence pseudo-aléatoire sur un code reçu. Cette description sera faite en référence à la figure 9 qui représente schématiquement un élément mobile comparable au répondeur représenté sur la figure 6 du document FR-A-2248517.

Sur la figure 9 annexée, on retrouve, de façon comparable à la figure 6 du document FR-A-2248517 un duplexeur 102 équipé d'une antenne 101 d'émission/réception, une source 103 de fréquence pilote, un étage 111 amplificateur de réception, un circuit 112 formant corrélateur en bande latérale unique avec amplification, un circuit 113 de commande d'asservissement en fréquence, un circuit de format temporel 104, un circuit 105 générateur de séquence pseudo-aléatoire, un modulateur de fréquence 121 et un amplificateur de puissance 122.

L'élément mobile représenté sur la figure 9 se distingue essentiellement du répondeur illustré sur la figure 6 du document FR-A-2248517 par la conception du module corrélateur à bande latérale unique et amplificateur 112 et du module de commande d'asservissement 113.

On va donc détailler maintenant la structure de ces modules.

Comme on l'a évoqué précédemment, le système décrit dans le document FR-A-2248517 exploite un asservissement classique de type symétrique, plus précisément par recherche du pic de corrélation pour une synchronisation grossière, puis par exploitation d'un signal différentiel qui s'annule à la coïncidence, pour une poursuite ultérieure fine de la coïncidence. En revanche, dans le cadre de la présente invention, la poursuite de coïncidence entre le code local et le code reçu est opérée par mesure d'amplitude multipoints sur la fonction de corrélation afin de déterminer la forme du front avant du pic de corrélation.

Plus précisément, cette poursuite de coïncidence est opérée en prenant différents niveaux d'une fonction de corrélation distants d'une fraction connue de la durée d'un élément binaire de codage de la séquence, en décalant la séquence locale jusqu'à obtention d'une valeur prédéterminée pour une fonction mettant en oeuvre ces différents niveaux, et en générant une séquence locale pilote décalée d'une valeur connue par rapport aux niveaux considérés de la fonction de corrélation.

Les différents niveaux précités de la fonction de corrélation, distants d'une quantité connue, peuvent être obtenus successivement en décalant progressivement une séquence locale unique, en corrélant successivement les diverses images de cette séquence locale unique successivement décalées, avec la séquence reçue, et en prenant en compte les différents niveaux correspondants de corrélation obtenus.

Toutefois, ce processus qui requiert différentes corrélations successives sur le code reçu au cours de diverses répétitions exige un temps de traitement relativement important.

Afin de limiter le temps de traitement, il est prévu plus précisément de préférence, des moyens travaillant en temps réel et qui comportent à cet effet, d'une part au niveau du générateur 105, des moyens générant simultanément les diverses séquences locales décalées entre elles d'une fraction connue d'un élément binaire de codage, et d'autre part au niveau du corrélateur 112, différentes voies qui assurent respectivement une corrélation entre la séquence pseudo-aléatoire reçue provenant de l'étage 111 et les diverses séquences pseudo-aléatoire locales décalées respectivement d'une fraction connue d'un élément binaire de la séquence pseudo-aléatoire, issues du générateur 105.

Les niveaux obtenus en sortie de chacune des voies du corrélateur 112 sont regroupés par le module d'asservissement 113 sous forme d'une fonction préétablie et lesdits enchainements répétitifs locaux ou séquences sont décalés progressivement jusqu'à obtention d'une valeur prédéterminée pour cette fonction réunissant les niveaux de sortie des différentes voies de corrélation.

De préférence, chacune des voies du corrélateur 112 reprend la structure de base décrite dans le document FR-A-2248517.

Ainsi, de préférence, chacune des voies du corrélateur 112 comprend un inverseur de phase 1120 commandé respectivement par l'une des séquences locales précitées venant du circuit 105. Cet inverseur de phase 1120 constitue le corrélateur proprement dit, puisque si la séquence pseudo-aléatoire locale respective est synchrone de la séquence pseudo-aléatoire reçue provenant du module 111, la sortie de l'inverseur de phase 1120 correspondant va être un signal sinusoïdal ne comportant aucune inversion de phase. Dans le cas contraire, la sortie de l'inverseur de phase 1120 va comporter des inversions de phases réparties de façon pratiquement aléatoire.

La sortie de l'inverseur de phase 1120 est appliquée à un démodulateur BLU 11211 qui reçoit, comme indiqué dans le document FR-A-2248517, une fréquence de base fixe du générateur de fréquence pilote 103. La sortie de l'inverseur de phase du corrélateur 1120 est un signal, typiquement à la fréquence de 38MHz, n'ayant pas ou ayant des inversions de phase suivant que le synchronisme est réalisé ou non à plus ou moins la durée de l'élément binaire de base composant le code des séquences pseudo-aléatoire. Le démodulateur BLU 11211 réalise en fait un changement de fréquence, pour passer typiquement à une fréquence de 100KHz.

Ainsi, les inversions de phase réparties de façon aléatoire en cas de non coïncidence se traduisent par des sauts de phase sur le signal en sortie du démodulateur BLU 11211. L'effet des sauts de phase aléatoires est de réduire l'amplitude moyenne du signal issu du démodulateur BLU 11211.

Le démodulateur BLU 11211 est suivi d'un amplificateur 11212 à fort gain. Ce dernier est lui-même suivi d'un circuit de porte 11213 commandé par le segment de réception provenant du circuit de format 104. Enfin, la porte 11213 est elle-même suivie d'un filtre intégrateur 11214.

On comprend ainsi qu'en sortie des différents filtres intégrateurs 11214 des diverses voies du corrélateur 112, on obtient des niveaux différents en fonction de la différence de coïncidence entre la séquence reçue et respectivement chacune des séquences locales appliquées aux inverseurs de phase 1120 et provenant du générateur 105.

Plus précisément encore, les niveaux de sortie des filtres intégrateurs 11214 sont nuls tant que la coïncidence n'est pas réalisée à plus ou moins la durée de l'élément binaire de base du codage, entre la séquence reçue du module 111 et l'une des séquences locales appliquées à l'inverseur de phase 1120 et provenant du générateur 105.

Les niveaux de sortie des filtres intégrateurs 11214 sont appliqués à un module composant la commande d'asservissement de fréquence 113.

Le module 113 combine les différents niveaux issus des filtres intégrateurs 11214 et commande, comme décrit dans le document FR-A-2248517, un décalage progressif des séquences pseudo-aléatoires locales générées par le module 105 jusqu'à obtention d'une valeur prédéterminée pour la fonction combinant les différents niveaux issus des filtres intégrateurs 11214.

Plus précisément encore, de préférence, au cours d'une phase de recherche, tant que les différents niveaux de sortie des filtres intégrateurs 11214 n'ont pas franchi un seuil prédéterminé supérieur au bruit, le module 113 commande un décalage progressif par pas des séquences pseudo-aléatoires locales. A cette fin, le module 113 agit sur l'étage générateur de fréquence pilote 103 pour ajouter une impulsion au signal d'horloge appliqué au circuit 105. De ce fait, les séquences pseudo-aléatoires locales générées par le circuit 105 et appliquées aux inverseurs de phase 1120 sont progressivement décalées d'un élément binaire. Plus précisément, la sortie correspondante du module 113 peut agir sur un oscillateur à relaxation intégré à l'étage 103 pour délivrer des impulsions d'horloge supplémentaires au générateur de fréquence 103. Bien entendu, on peut aussi prévoir une action directe sur le générateur de séquences 105.

Une fois la coïncidence grossière établie entre la séquence reçue et la séquence locale, c'est-à-dire lorsque les niveaux de sortie des différents étages intégrateurs 11214 ont franchi un seuil prédéterminé, le module 113 va au contraire agir sur l'étage 103 ou directement sur l'étage 105 générateur de séquences locales pour affiner la recherche de coïncidence. Plus précisément, le décalage opéré alors en continu, agit jusqu'à obtention de la valeur prédéterminée pour la fonction réunissant les différents niveaux de sortie des étages intégrateurs 11214. Cette action en continu peut être opérée par exemple sur la tension de commande d'un oscillateur commandé par une tension, intégré à l'étage générateur de fréquences pilotes 103.

Une fois la valeur prédéterminée obtenue pour la fonction réunissant les niveaux de sortie des filtres intégrateurs 11214, les diverses séquences pseudo-aléatoires locales issues du module 105 et appliquées aux inverseurs de phase 1120 sont positionnées avec précision par rapport à la séquence pseudo-aléatoire reçue. L'étage 105 peut alors générer une séquence pseudo-aléatoire pilote décalée d'une valeur connue par rapport aux séquences appliquées aux inverseurs de phase 1120, laquelle séquence pilote locale est en parfaite coïncidence avec la séquence reçue et peut être exploitée pour la mesure de distance.

Pour clarifier la structure de la présente invention, sur la figure 9 annexée, on a utilisé les mêmes références numériques que celles employées sur la figure 6 du document FR-A-2248517, pour les éléments équivalents.

Bien entendu le processus de recherche par mesure d'amplitude multipoints sur la fonction de corrélation afin de déterminer la forme du front avant du pic de corrélation s'applique avantageusement aux éléments mobiles qui subissent les effets pernicieux des multiples trajets.

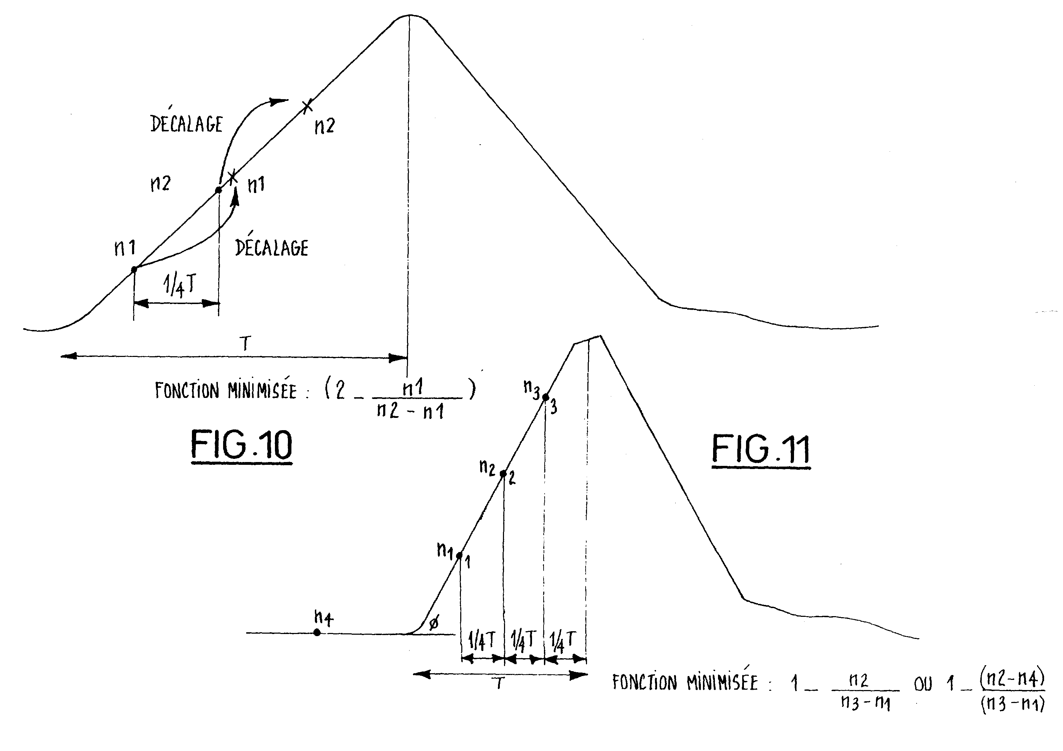

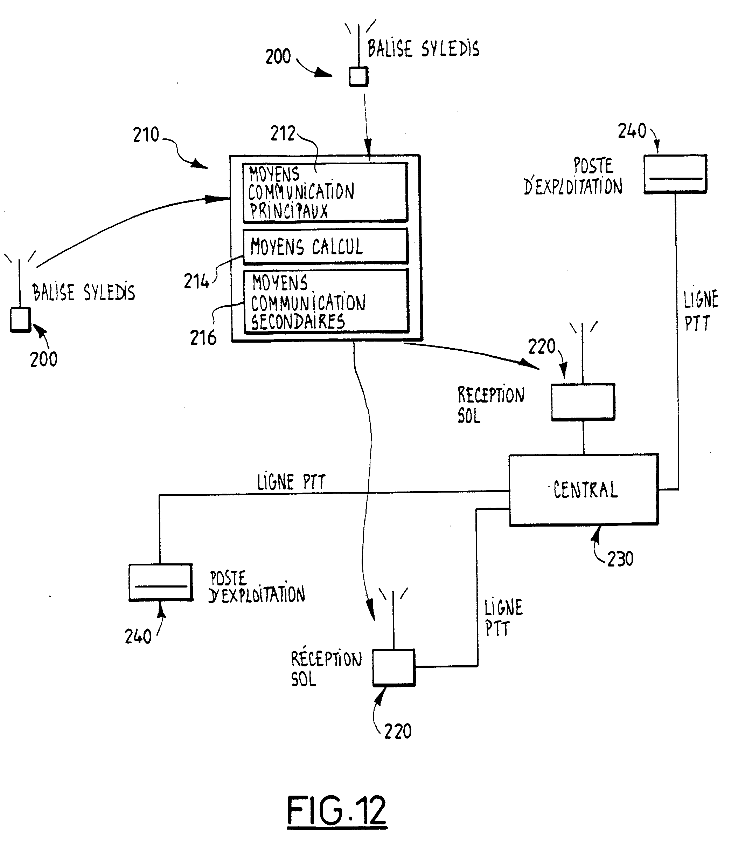

On va maintenant préciser cette recherche de coïncidence en regard des figures 10 et 11.

Sur la figure 10, on a représenté schématiquement un pic théorique de corrélation.

Si l'on suppose que le corrélateur 112 est adapté pour délivrer deux niveaux n1 et n2 décalés entre eux d'un quart de la demie durée T du pic de corrélation, soit le quart de la durée T du front montant ou encore le quart de la durée d'un élément binaire de la séquence, et que l'on veut caler respectivement à la moitié et au quart du pic de corrélation, la fonction combinant les niveaux n1 et n2 calculés par le module 113 peut être égale à 2-n1/(n2-n1) et cette fonction doit être annulée pour obtenir la recherche de coïncidence. En d'autres termes, le module 113 actionne l'étage 103 et le générateur 105 pour décaler progressivement les séquences pseudo-aléatoires locales correspondant aux niveaux n1 et n2 tant que la fonction 2-n1/(n2-n1) n'est pas minimisée. Lorsque cette fonction s'annule, l'on sait que la séquence locale délivrant par corrélation le niveau n1 est décalée d'un demi élément binaire par rapport à la séquence reçue, tandis que la séquence locale délivrant le niveau n2 est décalée d'un quart d'élément binaire par rapport à la séquence reçue. Sur la figure 10 on a ainsi schématisé le décalage des niveaux n1 et n2 jusqu'à l'obtention du synchronisme recherché. Le module 105 générateur de séquence pseudo-aléatoire peut par conséquent aisément délivrer une séquence pseudo-aléatoire pilote synchronisée sur la séquence reçue, en décalant la séquence pseudo-aléatoire pilote locale ainsi délivrée d'un quart d'élément binaire par rapport à la séquence délivrant le niveau n2 ou d'un demi élément binaire par rapport à celle délivrant le niveau n1.

Toutefois, en pratique, comme cela est illustré sur les figures 9 et 11, pour obtenir une plus grande précision à bas niveau, un troisième point est nécessaire. Ce troisième point est pris en avant du sommet du pic de corrélation, et décalé de trois quarts de la durée T du front montant de celui-ci. Cette variante de réalisation préférentielle correspond à celle illustrée sur la figure 9 pour laquelle on distingue trois voies affectées respectivement d'indice A, B et C au niveau du corrélateur 112. Si l'on appelle respectivement n1, n2 et n3 les niveaux délivrés en sortie des voies A, B et C du corrélateur 112 recevant sur leur inverseur de phase 1120 des séquences locales décalées entre elles d'un quart de la demie durée T du pic de corrélation et que l'on veut caler respectivement aux trois quarts, à la moitié et au quart de la durée du front montant par rapport à l'estimation du sommet du pic de corrélation, la fonction exploitée et minimisée par le module 113 peut être de la forme : 1-n2/(n3-n1).

Lorsque cette fonction est minimisée, le module 105 peut générer une séquence pilote locale synchronisée sur la séquence reçue et décalée d'un quart d'élément binaire de codage par rapport à la séquence locale générant par corrélation le niveau n3 (ou encore décalée d'un demi élément binaire de codage par rapport à la séquence locale générant par corrélation le niveau n2).

Pour améliorer encore la sensibilité, un troisième point peut être pris en compte au niveau du module 113. Ce point n4 correspond au niveau de bruit, comme schématisé sur la figure 11.

En pratique, le niveau de bruit est généralement connu et peut donc être appliqué sous forme d'une valeur prédéterminée constante au module 113. Dans le cas où le niveau de bruit n4 est ainsi pris en compte, la fonction minimisée par le module 113 est de la forme :
1-(n2-n4)/(n3-n1).

Sur la figure 9 on a schématisé sous les références 1050 et 1051 des éléments de retard de 1/4 de T, aptes à former les séquences locales générant les niveaux n2 et n3 à partir de la séquence correspondant au niveau n1 issue du module 105, sous la référence 1052 un élément de retard de 1/4 de T apte à former la séquence pilote à partir de la séquence correspondant au niveau n3 et sous la référence 106 un module apte à calculer la position du mobile à partir de la séquence pilote reçue et susceptible de recevoir des informations additionnelles telles qu'une information vitesse, lesquelles informations sont appliquées, ainsi que l'information de position, au modulateur de fréquence 121, comme on le verra par la suite. Le module 106 dialogue avec les moyens embarqués sur le mobile par l'intermédiaire d'un port de communication 1060. Les séquences générant respectivement les niveaux n1, n2 et n3 sont référencées respectivement s1, s2 et s3.

La description technique qui précède évoque la réalisation du corrélateur 112 sous forme de composants électroniques. Bien entendu l'état de l'art actuel permet une transcription numérique de ce procédé en utilisant les techniques connues de traitement du signal.

On va maintenant décrire une application particulière du système de radionavigation conforme à la présente invention à un système de gestion de flotte de véhicules, en regard de la figure 12.

On distingue sur cette figure un réseau de balises 200, un véhicule 210, des stations de réception fixes 220, un poste central 230 et des postes d'exploitation 240.

Pour simplifier l'illustration on a représenté un seul véhicule 210 sur la figure 12. En pratique, cependant la flotte comprend un grand nombre de véhicule 210.

Les balises 200 sont de préférence des balises de type SYLEDIS conformes au document FR-A-2248517. Ces balises SYLEDIS 200 sont par conséquent adaptées pour dialoguer avec des moyens complémentaires 212 embarqués sur les véhicules 210 et dénommés précédemment moyens de communications principaux. Les balises SYLEDIS 200 peuvent être formées de répondeurs, ce qui conduit à un processus de détermination de position de type circulaire comme illustré sur la figure 1. Toutefois, comme on l'a dit précédemment, un tel système peut conduire à saturation.

Ainsi, de préférence, les balises 200 sont organisées autour d'un agencement maître/esclave, comme illustré sur la figure 2 et décrit dans le document FR-A-248517, pour permettre une détermination de position de type hyperbolique.

Les échanges entre les balises de référence 200 et les moyens de commnication principaux 212 embarqués sur les véhicules 210 sont ainsi établis sur la base de créneaux de transmission répondant à une trame temporelle SYLEDIS pré-établie.

Les balises 200 et les moyens de communication principaux 212 embarqués sur les véhicules 210 constituent ainsi un système de radionavigation SYLEDIS classique.

En outre, le système comprend des moyens de calcul adaptés pour calculer la position de chaque véhicule 210 par rapport aux balises de référence 200, sur la base des informations issues des moyens de communication principaux 212, par prise en compte du décalage temporel entre la séquence reçue des balises 200 par les moyens 212 et la séquence locale pilote générée par ces moyens 212.

Pour assurer la gestion d'une flotte de véhicules 210, il est nécessaire de disposer des informations de position au niveau d'un poste central 230.

A cet effet, la Demanderesse a envisagé dans un premier temps de transmettre au poste central 230 les informations issues des moyens de communication principaux 212 embarqués sur les véhicules 210 et d'équiper le poste central 230 de moyens de calcul permettant de calculer la position respective de chaque véhicule 210, sur la base de ces informations.

Après étude et essais il s'est avéré que cette structure est extrêmement lourde et exige au niveau du poste central 230 des moyens de calcul de très grande capacité dès lors que la flotte à gérer comporte un nombre de véhicules conséquent. De plus, cette architecture exige également fréquemment le renvoi vers les véhicules 210 de l'information de position calculée au niveau du poste central 230.

Pour résoudre cette difficulté et obtenir un système de gestion de flotte exploitable, la Demanderesse propose, comme représenté sur la figure 12 annexée, d'intégrer les moyens de calcul de position 214 respectivement sur chaque véhicule 210, et d'adjoindre à l'installation le réseau de stations de réception fixe 220 et des moyens de transmission secondaires 216 embarqués sur chaque véhicule 210.

Plus précisément, les moyens de transmission secondaires 216 sont adaptés pour transmettre aux stations de réception au sol 220 l'information représentative de la position du véhicule 210 calculée grâce aux moyens de calcul embarqués 214 par modulation d'un signal pendant des créneaux de transmission semblables aux créneaux de localisation échangés entre les balises de référence 200 et les moyens de communication principaux 212. Les moyens de transmission secondaires 216 partagent ainsi la même trame temporelle et la même bande de fréquence que les moyens de transmission principaux 212.

En d'autres termes, les moyens de transmission secondaires 216 et les stations de réception au sol 220 constituent un réseau secondaire qui partage la même trame temporelle que le réseau SYLEDIS principal formé entre les balises de référence 200 et les moyens de transmission principaux 212.

Par ailleurs, selon un premier mode de réalisation, la trame temporelle exploitée et partagée d'une part par le réseau secondaire formé par les moyens de transmission secondaires 216 et les stations de réception au sol 220 et d'autre part par le réseau principal composé par les balises de référence 200 et les moyens de communication principaux 212 est synchronisée sur une base de temps propre au réseau principal composé des balises de référence 200 et des moyens de communication principaux 212.

En variante, la trame temporelle exploitée et partagée par les moyens de transmission secondaires 216 et les moyens de communication principaux 212 peut être synchronisée sur une base de temps externe au système de transmission des balises de référence 200 et des moyens de communication principaux 212, par exemple sur la base de temps d'un système GPS. Cette variante permet de gérer à l'aide du même système de gestion de flotte, des véhicules équipés de systèmes de localisation différents, par exemple pour les uns un système de localisation SYLEDIS et pour les autres un système de localisation GPS, sous réserve d'équiper chacun de ces véhicules de moyens de transmission secondaires 216.

La liaison définie entre les moyens de communication secondaires 216 embarqués sur véhicules et les stations de réception au sol 220 définit de préférence une transmission unilatérale dans le sens véhicule 210 vers les stations 220. Une telle transmission unilatérale mobile-sol synchronisée permet un gain de temps important par rapport aux processus classiques d'interrogation-réponse entre mobile et station fixes, tels que décrits par exemple dans le document US-A-3774215.

En utilisant un réseau secondaire entre les moyens de communication secondaires 216 embarqués et les stations de réception au sol 220, partageant la même trame temporelle que le réseau SYLEDIS principal, on alloue un créneau de transmission spécifique, et à titre exclusif, à chaque véhicule 210. Ainsi, chaque véhicule 210 peut être identifié au niveau des stations 220 et du poste central 230, simplement par son créneau temporel de transmission, sans avoir à placer dans le message transmis aux stations fixes 220 un numéro spécifique de mobile.

Les stations de réception au sol 220 sont indépendantes des balises de référence SYLEDIS 200. Elles peuvent être regroupées géographiquement avec celles-ci ou non.

Les liaisons définies entre le poste central 230 et chaque poste d'exploitation 240 peuvent être formées de toute nature appropriée. De préférence, ces liaisons sont formées de lignes PTT spécialisées.

On comprend que dans le cadre de la structure proposée par la présente invention, les moyens de calcul de position 214 étant embarqués respectivement sur chaque véhicule 210, le poste central 230 se contente de classer les informations reçues, d'éviter les redondances en provenance de diverses stations 220 et de délivrer les informations appropriées à chaque poste d'exploitation 240.

On a indiqué précédemment que les moyens de communication secondaires 216 embarqués sur chaque véhicule 210 transmettent aux stations 220 une information représentative de leur position calculée à bord par les moyens 214.

En pratique, les moyens de communication secondaires 216 peuvent être utilisés pour transmettre également aux stations 220, et au cours des mêmes créneaux d'émission, des informations additionnelles liées à l'état du véhicule, par exemple la vitesse de celui-ci. Ces informations proviennent du module 106 représenté sur la figure 9. Les informations de position ainsi que les informations additionnelles appliquées aux moyens de transmission secondaires 216 sont de préférence disponibles sous forme numérique. Elles sont utilisées pour moduler le signal adressé aux stations 220 sur la base de toute modulation appropriée.

Toutefois, dans le cadre de la présente invention, la modulation du signal adressé aux stations 220 n'est pas opérée en tout ou rien, notamment par inversion de phase d'un signal sinusoïdal, comme évoqué dans le document FR-A-2248517, mais par transition progressive de fréquence entre les états 0 et les états 1 des signaux numériques précités.

Plus précisément encore, de préférence, cette modulation est opérée par modulation de fréquence d'une porteuse, avec transition de type sinusoïdal entre les différents états.

Une telle modulation progressive conduit à une réduction de la largeur du spectre généré.

Dans le cadre de la présente invention, les informations de télémesure adressées par les moyens de communication secondaires 216 aux stations fixes 220 sont organisées de préférence sous forme de paquets brefs, de durée voisine de 6 millisecondes. Cette disposition permet de réduire les distorsions de phase de la porteuse sur la durée du message et de diminuer ainsi le taux d'erreur, principalement pendant les déplacements du mobile 210.

Plus précisément encore, le réseau SYLEDIS représenté schématiquement sur la figure 12 est de préférence organisé sous forme d'une trame temporelle comprenant différents formats eux-mêmes sous divisés en une pluralité de créneaux.

Pour un créneau de base de l'ordre de 6 millisecondes, trente créneaux conduisent à un format de l'ordre de 200 millisecondes. Cinq formats conduisent à un renouvellement de la trame temporelle toutes les secondes. Trois cents formats conduisent à un renouvellement de la trame temporelle toutes les minutes.

Par ailleurs, de préférence, la bande de fréquence totale allouée au système, typiquement de 4MHz, est organisée en une pluralité de canaux, typiquement quatre-vingt canaux espacés de 45kHz.

Bien entendu, chacun de ces canaux est lui-même organisé en trame composée de formats sous-divisés en créneaux comme indiqué précédemment. L'homme de l'art comprendra aisément que l'organisation de la bande de fréquence en différents canaux et la division de la trame temporelle en formats et créneaux conduit à un nombre très important de véhicules 210 susceptibles de composer la flotte gérée.

Chaque station au sol 220 doit bien sur comporter un nombre de voies égal au nombre de canaux composant la bande de fréquence totale allouée au système, soit 80 voies selon l'exemple précité.

Par ailleurs, on peut envisager des fréquences de renouvellement différentes pour les différents véhicules 210. En d'autres termes, pour une trame donnée, un véhicule peut se voir allouer un créneau unique, tandis qu'un autre véhicule peut se voir allouer un créneau dans chaque format.

Afin de protéger les informations numériques transmises par les moyens de communication secondaires 216 embarqués, la présente invention prévoit un cryptage qui peut être individualisé pour chacun des mobiles.

Ce cryptage est opéré de préférence par un code pseudo-aléatoire combiné aux informations à transmettre et initialisé par une clef numérique modifiable au gré de l'utilisateur.

Bien entendu la présente invention n'est pas limitée aux modes de réalisation particuliers qui viennent d'être décrits mais s'étend à toute variante conforme à son esprit.

## Revendications

1. Procédé de radiolocalisation du type comprenant les étapes qui consistent à:
- générer des signaux de référence à l'aide de balises de référence (200),
- détecter les signaux de référence à l'aide de moyens de communication principaux (212) embarqués respectivement sur des véhicules (210), les échanges entre les balises de référence (200) et les moyens de communication principaux (216) étant établis sur la base de créneaux de transmission répondant à une trame temporelle pré-établie,
- calculer, à l'aide de moyens de calcul (214) embarqués respectivement sur chaque véhicule (210) et reliés aux moyens de communication principaux (212), la position de chaque véhicule par rapport aux balises de référence (200), sur la base des informations issues des moyens de communication principaux (212),
caractérisé en ce qu'il comprend en outre les étapes qui consistent à :
- transmettre à un réseau de stations de réception fixes (220), à l'aide de moyens de transmission secondaires (216) embarqués respectivement sur chaque véhicule, l'information représentative de la position de chaque véhicule calculée, grâce aux moyens de calcul embarqués (214), par modulation d'un signal pendant des créneaux de transmission semblables aux créneaux de localisation échangés entre les balises de référence (200) et les moyens de communication principaux (212), et partageant la même trame temporelle et la même bande de fréquence que ceux-ci.

2. Procédé selon la revendication 1, caractérisé par le fait qu'il comprend en outre les étapes qui consistent à:
- au niveau d'un émetteur, rayonner un train d'ondes de haute fréquence comprenant un signal sinusoïdal modulé par inversion de phase selon un premier enchainement répétitif d'une séquence pseudo-aléatoire connue, définissant une première base de temps,
- au niveau d'un récepteur, recevoir le train d'ondes de haute fréquence et le démoduler par corrélation du premier enchainement répétitif de la séquence pseudo-aléatoire connue, qui est reçue, porté par le train d'ondes de haute fréquence, avec un second enchainement répétitif, local, d'une séquence pseudo-aléatoire, ledit second enchainement répétitif étant décalé dans le temps jusqu'à ce qu'il coïncide avec le premier enchainement répétitif reçu et définissant ainsi une seconde base de temps liée au temps de propagation de l'onde électromagnétique de l'émetteur au récepteur, donc à la distance de l'émetteur au récepteur,
caractérisé par le fait que la poursuite de coïncidence (112, 113) entre le premier et le second nchainement répétitif est opérée par mesure d'amplitude multipoints sur la fonction de corrélation afin de déterminer la forme du front avant du pic de corrélation.

3. Procédé selon la revendication 2, caractérisé par le fait que l'étape de poursuite de coïncidence est opérée en prenant différents niveaux de corrélation séparés d'une fraction connue d'un élément binaire de codage de la séquence pseudo-aléatoire, en décalant la séquence locale jusqu'à obtention d'une valeur prédéterminée pour une fonction mettant en oeuvre ces niveaux, et en générant une séquence locale pilote décalée d'une valeur connue par rapport aux niveaux considérés de la fonction de corrélation.

4. Procédé selon l'une des revendications 2 ou 3, caractérisé par le fait que la poursuite de coïncidence est opérée par corrélation d'un premier enchainement reçu avec une pluralité d'enchainements répétitifs locaux décalés respectivement d'une fraction connue d'un élément binaire de la séquence pseudo-aléatoire, et en décalant les enchainements locaux jusqu'à obtention d'une valeur prédéterminée pour une fonction mettant en oeuvre les niveaux obtenus pour les diverses fonctions de corrélation.

5. Procédé selon l'une des revendications 2 à 4, caractérisé par le fait que la poursuite de coïncidence est opérée en prenant en compte deux niveaux n1, n2 de corrélation obtenus à l'aide de deux séquences locales décalées entre elles d'un quart de la durée d'un élément binaire de codage, en décalant ces séquences jusqu'à obtention d'un minimum pour la fonction: 2-n1/(n2-n1) et en générant une séquence pilote locale décalée d'un quart de la durée d'un élément binaire de codage par rapport à la séquence locale correspondant au niveau n2.

6. Procédé selon l'une des revendications 2 à 4, caractérisé par le fait que l'étape de poursuite de coïncidence est opérée en prenant en compte trois niveaux n1, n2, n3 de corrélation obtenus à l'aide de trois séquences locales décalées entre elles d'un quart de la durée d'un élément binaire de codage, en décalant ces séquences locales jusqu'à obtention d'un minimum pour la fonction : 1-n2/(n3-n1) et en générant une séquence pilote locale décalée d'un quart de la durée d'un élément binaire de codage par rapport à la séquence locale correspondant au niveau n3.

7. Procédé selon l'une des revendications 2 à 4, caractérisé par le fait que l'étape de poursuite de coïncidence est opérée en prenant trois niveaux n1, n2 et n3 de corrélation obtenus à l'aide de trois séquences locales décalées entre elles d'un quart de la durée d'un élément binaire de codage, et un niveau de bruit n4, en décalant les séquences locales jusqu'à obtention d'un minimum pour la fonction: 1-(n2-n4)/(n3-n1), et en générant une séquence pilote locale décalée d'un quart de la durée d'un élément binaire de codage par rapport à la séquence locale correspondant au niveau n3.

8. Procédé selon l'une des revendications 2 à 7, caractérisé par le fait qu'il comprend en outre une étape de recherche grossière de coïncidence entre une séquence reçue et une séquence locale par détection du dépassement d'un seuil prédéterminé de bruit par les diverses fonctions de corrélation mises en oeuvre.

9. Procédé selon l'une des revendications 1 à 8, caractérisé par le fait qu'il comprend les étapes consistant à:
- au niveau des moyens de transmission secondaires (216), rayonner un train d'ondes de haute fréquence comprenant un signal modulé par un signal représentatif de la position du véhicule calculée par les moyens de calceul embarqués (214), et
- au niveau des stations au sol (220) recevoir le train d'ondes de haute fréquence et le démoduler pour récupérer le signal de codage initial.

10. Procédé selon l'une des revendications 1 à 9, caractérisé par le fait que la trame temporelle exploitée et partagée d'une part par le réseau secondaire formé par les moyens de transmission secondaires (216) et les stations de réception fixes (220) et d'autre part par le réseau principal composé par les balises de référence (200) et les moyens de communication principaux (212) est synchronisée sur une base de temps propre au réseau principal composé des balises de référence (200) et des moyens de communication principaux (212).

11. Procédé selon l'une des revendications 1 à 9, caractérisé par le fait que la trame temporelle exploitée et partagée par les moyens de transmission secondaires (216) et les moyens de communication principaux (212) est synchronisée sur une base de temps externe au système de transmission des balises de référence (200) et des moyens de communication principaux (212).

12. Procédé selon la revendication 11, caractérisé par le fait que la trame temporelle exploitée et partagée par les moyens de transmission secondaires (216) et les moyens de communication principaux (212) est synchronisée sur la base de temps d'un système GPS.

13. Procédé selon la revendication 12, caractérisé par le fait qu'il gére des véhicules équipés de systèmes de localisation différents pourvus chacun de moyens de transmission secondaires (216).

14. Procédé selon l'une des revendications 1 à 13, caractérisé par le fait que les moyens de transmission secondaires (216) définissent une transmission unilatérale dans le sens véhicule (210) vers les stations au sol (220).

15. Procédé selon l'une des revendications 1 à 14, caractérisé par le fait que la fréquence de répétition des émissions par les moyens de transmission secondaires (216) diffère d'un véhicule à l'autre.

16. Procédé selon l'une des revendications 1 à 15, caractérisé par le fait qu'un créneau de transmission est alloué à titre exclusif à chacun des moyens de transmission secondaires (216) embarqués sur un véhicule (210).

17. Procédé selon l'une des revendications 1 à 16, caractérisé par le fait que la trame temporelle exploitée par les moyens de transmission secondaires (216) est divisée en différents formats eux-mêmes composés de plusieurs créneaux.

18. Procédé selon l'une des revendications 1 à 16, caractérisé par le fait que la modulation au niveau des moyens de transmission secondaires (216) est opérée par transition progressive de fréquence entre les états des signaux numériques représentatifs du codage.

19. Procédé selon la revendication 18, caractérisé par le fait que la transition est de type sinusoïdal.

20. Procédé selon l'une des revendications 1 à 19, caractérisé par le fait que les informations transmises par les moyens de transmission secondaires (216) sont cryptées.

21. Procédé selon l'une des revendications 1 à 20, caractérisé par le fait que la bande de fréquence allouée est divisée en plusieurs canaux.

22. Système de gestion de flotte de véhicules comprenant :
- un système de radionavigation comportant :
. des balises de référence (200) , et
. des moyens de communication principaux (212) embarqués respectivement sur chaque véhicule (210), les échanges entre les balises de référence (200) et les moyens de communication principaux (210) embarqués étant établis sur la base de créneaux de transmission répondant à une trame temporelle pré-établie, et
. des moyens de calcul (214) embarqués respectivement sur chaque véhicule et reliés aux moyens de communication principaux (212), lesquels moyens de calcul (214) sont adaptés pour calculer la position du véhicule par rapport aux balises de référence (200), sur la base des informations issues de moyens de communication principaux (212),
caractérisé par le fait qu'il comprend en outre :
- un réseau de stations de réception fixes (220), et
- des moyens de transmission secondaires (216) embarqués respectivement sur chaque véhicule (210) et adaptés pour transmettre aux stations (220), l'information représentative de la position du véhicule calculée grâce aux moyens de calcul embarqués (214), par modulation d'un signal pendant des créneaux de transmission semblables aux créneaux de localisation échangés entre les balises de référence (200) et les moyens de communication principaux (212), et partageant la même trame temporelle et la même bande de fréquence que ceux-ci.

23. Système selon la revendication 22, caractérisé par le fait que la trame temporelle exploitée et partagée d'une part par le réseau secondaire formé par les moyens de transmission secondaires (216) et les stations de réception fixes (220) et d'autre part par le réseau principal composé par les balises de référence (200) et les moyens de communication principaux (212) est synchronisée sur une base de temps propre au réseau principal composé des balises de référence (200) et des moyens de communication principaux (212).

24. Système selon la revendication 22, caractérisé par le fait que la trame temporelle exploitée et partagée par les moyens de transmission secondaires (216) et les moyens de communication principaux (212) est synchronisée sur une base de temps externe au système de transmission des balises de référence (200) et des moyens de communication principaux (212).

25. Système selon la revendication 24, caractérisé par le fait que la trame temporelle exploitée et partagée par les moyens de transmission secondaires (216) et les moyens de communication principaux (212) est synchronisée sur la base de temps d'un système GPS.

26. Système selon la revendication 25, caractérisé par le fait qu'il gére des véhicules équipés de systèmes de localisation différents pourvus chacun de moyens de transmission secondaires (216).

27. Système selon l'une des revendications 22 à 26, caractérisé par le fait que les moyens de transmission secondaires (216) définissent une transmission unilatérale en direction des stations fixes au sol (220).

28. Système selon l'une des revendications 22 à 27, caractérisé par le fait que la fréquence de répétition des émissions par les moyens de transmission secondaires (216) est différente d'un véhicule (210) à l'autre.

29. Système selon l'une des revendications 22 à 28, caractérisé par le fait que les moyens de transmission secondaires (216), rayonnent un train d'ondes de haute fréquence comprenant un signal modulé par un signal représentatif de la position du véhicule calculée par les moyens de calcul embarqués (214), et les stations au sol (220) reçoivent le train d'ondes de haute fréquence et le démodulent pour récupérer le signal de codage initial.

30. Système selon l'une des revendications 22 à 29, caractérisé par le fait qu'un créneau de transmission est alloué à titre exclusif à chacun des moyens de transmission secondaires (216) embarqués sur un véhicule (210).

31. Système selon l'une des revendications 22 à 30, caractérisé par le fait que la trame temporelle exploitée par les moyens de transmission secondaires (216) est divisée en différents formats eux-mêmes composés de plusieurs créneaux.

32. Système selon l'une des revendications 22 à 31, caractérisé par le fait que la modulation au niveau des moyens de transmission secondaires (216) est opérée par transition progressive de fréquence entre les états des signaux numériques représentatifs du codage.

33. Système selon la revendication 32, caractérisé par le fait que la transition est de type sinusoïdal.

34. Système selon l'une des revendications 22 à 33, caractérisé par le fait que la bande de fréquence allouée est divisée en plusieurs canaux.

35. Système selon l'une des revendications 22 à 34, caractérisé par le fait que les informations transmises par les moyens de transmission secondaires (216) sont cryptées.

36. Système selon l'une des revendications 22 à 35 dans lequel chaque balise de référence (200) possède un émetteur qui rayonne un train d'ondes de haute fréquence comprenant un signal sinusoïdal modulé par inversion de phase selon un premier enchainement répétitif d'une séquence pseudo-aléatoire connue, définissant une première base de temps, et chaque moyen de communication principal (212) embarqué sur un véhicule (210) comprend un récepteur qui reçoit le train d'ondes de haute fréquence et le démodule par corrélation du premier enchainement répétitif de la séquence pseudo-aléatoire connue, qui est reçue, porté par le train d'ondes de haute fréquence, avec un second enchainement répétitif, local, d'une séquence pseudo-aléatoire, ledit second enchainement répétitif étant décalé dans le temps jusqu'à ce qu'il coïncide avec le premier enchainement répétitif reçu et définissant ainsi une seconde base de temps liée au temps de propagation de l'onde électromagnétique de l'émetteur au récepteur, donc à la distance de l'émetteur au récepteur, caractérisé par le fait que chaque moyen de communication principal embarqué (212) comprend des moyens de poursuite de coïncidence (112, 113) entre le premier et le second enchainement répétitif par mesure d'amplitude multipoints sur la fonction de corrélation afin de déterminer la forme du front avant du pic de corrélation.

37. Système selon la revendication 36, caractérisé par le fait que chaque moyen de communication principal (212) comprend des moyens (112) de prise en compte de différents niveaux de corrélation séparés d'une fraction connue d'un élément binaire de codage de la séquence pseudo-aléatoire, des moyens (103) de décalage de la séquence locale jusqu'à obtention d'une valeur prédéterminée pour une fonction mettant en oeuvre ces niveaux, et des moyens (105) de génération d'une séquence locale pilote décalée d'une valeur connue par rapport aux niveaux considérés de la fonction de corrélation.

38. Système selon l'une des revendications 36 ou 37, caractérisé par le fait que chaque moyen de communication principal embarqué (212) comprend des moyens (105) de génération d'une pluralité d'enchainements répétitifs locaux décalés respectivement d'une fraction connue d'un élément binaire de la séquence pseudo-aléatoire, des moyens (1120) de corrélation d'un premier enchainement reçu avec respectiement chacun des enchainements répétitifs locaux décalés et des moyens (113, 103) de décalage des enchainements locaux jusqu'à obtention d'une valeur prédéterminée pour une fonction mettant en oeuvre les niveaux obtenus pour les diverses fonctions de corrélation.

39. Système selon l'une des revendications 36 à 38, caractérisé par le fait que chaque moyen de communication principal (212) comprend des moyens de mesure de deux niveaux n1, n2 de corrélation obtenus à l'aide de deux séquences locales décalées entre elles d'un quart de la durée d'un élément binaire de codage, des moyens (103, 113) de décalage de ces séquences jusqu'à obtention d'un minimum pour la fonction : 2-n1/(n2-n1) et des moyens de génération d'une séquence pilote locale décalée d'un quart de la durée d'un élément binaire de codage par rapport à la séquence locale correspondant au niveau n2.

40. Système selon l'une des revendications 36 à 38, caractérisé par le fait que chaque moyen de communication principal (212) comprend des moyens de mesure de trois niveaux n1, n2, n3 de corrélation obtenus à l'aide de trois séquences locales décalées entre elles d'un quart de la durée d'un élément binaire de codage, des moyens (103, 113) de décalage de ces séquences locales jusqu'à obtention d'un minimum pour la fonction : 1-n2/(n3-n1) et des moyens de génération d'une séquence pilote locale décalée d'un quart de la durée d'un élément binaire de codage par rapport à la séquence locale correspondant au niveau n3.

41. Système selon l'une des revendications 36 à 38, caractérisé par le fait que chaque moyen de communication principal (212) comprend des moyens de mesure de trois niveaux n1, n2 et n3 de corrélation obtenus à l'aide de trois séquences locales décalées entre elles d'un quart de la durée d'un élément binaire de codage, et un niveau de bruit n4, des moyens (103, 113) de décalage de ces séquences locales jusqu'à obtention d'un minimum pour la fonction : 1-(n2-n4)/(n3-n1), et des moyens de génération d'une séquence pilote locale décalée d'un quart de la durée d'un élément binaire de codage par rapport à la séquence locale correspondant au niveau n3.

42. Système selon l'une des revendications 36 à 39, caractérisé par le fait qu'il comprend en outre des moyens (113) de recherche grossière de coïncidence entre une séquence reçue et une séquence locale par détection du dépassement d'un seuil prédéterminé de bruit par les diverses fonctions de corrélation mises en oeuvre.

## Patentansprüche

1. Funkortungsverfahren mit den folgenden Verfahrensschritten:
- Erzeugen von Referenzsignalen mittels Referenzbaken (200);
- Erfassen der Referenzsignale mittels an Bord von Fahrzeugen (210) befindlicher Hauptkommunikationseinrichtungen (212), wobei der Austausch zwischen den Referenzbaken (200) und den Hauptkommunikationseinrichtungen (212) auf der Basis von einem vorgegebenen Zeitraster entsprechenden Übertragungsimpulsen erfolgt,
- Berechnen der Position jedes Fahrzeuges in bezug auf die Referenzbaken (200) auf der Basis der von der Hauptkommunikationseinrichtung (212) gelieferten Informationen mittels eines an Bord jedes Fahrzeuges (210) befindlichen und mit der Hauptkommunikationseinrichtung (212) verbundenen Rechners (214),
gekennzeichnet durch den weiteren Verfahrensschritt:
- Übertragen der mittels des an Bord befindlichen Rechners (214) berechneten Information, die die Position jedes Fahrzeuges wiedergibt, durch eine an Bord jedes Fahrzeuges befindliche sekundäre Sendeeinrichtung (216) auf ein Netz von festen Empfangsstationen (220) mittels Modulation eines Signals während der Übertragungsimpulse, die den zwischen den Referenzbaken (200) und der Hauptkommunikationseinrichtung (212) ausgetauschten Ortungsimpulsen ähneln und in demselben Zeitraster und Frequenzbereich liegen wie diese.

2. Verfahren nach Anspruch 1,
gekennzeichnet durch die weiteren Verfahrensschritte:
- Am Ort eines Senders Aussenden eines hochfrequenten Wellenzuges mit einem sinusförmigen Signal, moduliert durch Phasenumkehr gemäß einer ersten wiederholten Verkettung einer bekannten pseudozufälligen Sequenz, wodurch eine erste Zeitbasis bestimmt ist;
- am Ort eines Empfängers Empfangen und Demodulieren des hochfrequenten Wellenzuges durch Korrelation der ersten wiederholten Verkettung der bekannten pseudozufälligen Sequenz, die, von dem hochfrequenten Wellenzug getragen, mit einer lokalen zweiten wiederholten Verkettung einer pseudozufälligen Sequenz empfangen wird, wobei die zweite wiederholte Verkettung zeitlich verschoben wird, bis sie mit der empfangenen ersten wiederholten Verkettung übereinstimmt, so daß eine zweite Zeitbasis bestimmt ist, die von der Laufzeit der elektromagnetischen Welle vom Sender zum Empfänger und somit von der Entfernung zwischen Sender und Empfänger abhängt,
dadurch gekennzeichnet, daß die Ermittlung einer Koinzidenz (112, 113) zwischen der ersten und der zweiten wiederholten Verkettung durch Mehrstellen-Amplitudenmessung der Korrelationsfunktion erfolgt, um die Form der Vorderflanke des Korrelationspeaks zu bestimmen.

3. Verfahren nach Anspruch 2,
dadurch gekennzeichnet, daß der Verfahrensschritt der Koinzidenz ausgeführt wird durch Verwenden unterschiedlicher Korrelationswerte, die von einem bekannten binären Codierungsteil der pseudozufälligen Sequenz getrennt sind, und Verschieben der lokalen Sequenz bis zum Erhalt eines vorgegebenen Wertes für eine Funktion zur Aktivierung dieser Werte, wobei eine lokale Pilotsequenz erzeugt wird, die um einen bekannten Wert relativ zu den berücksichtigten Werten der Korrelationsfunktion verschoben ist.

4. Verfahren nach einem der Ansprüche 2 oder 3,
dadurch gekennzeichnet, daß die Ermittlung einer Koinzidenz erfolgt durch Korrelation einer ersten empfangenen Verkettung mit mehreren wiederholten lokalen Verkettungen, die jeweils um einen bekannten Bruchteil eines binären Teiles relativ zu der pseudozufälligen Sequenz verschoben sind, wobei die lokalen Verkettungen verschoben werden, bis ein vorgegebener Wert für eine Funktion erreicht ist, die die erreichten Werte für die verschiedenen Korrelationsfunktionen aktiviert.

5. Verfahren nach einem der Ansprüche 2 bis 4,
dadurch gekennzeichnet, daß zur Ermittlung einer Koinzidenz zwei Korrelationswerte n1, n2 berücksichtigt werden, die mittels zweier lokaler Sequenzen erhalten sind, welche zueinander um ein Viertel der Dauer eines binären Codierungsteiles verschoben sind, wobei diese Sequenzen bis zur Erzielung eines Minimalwertes für die Funktion 2-n1/(n2-n1) verschoben werden, und wobei eine lokale Pilotsequenz erzeugt wird, die um ein Viertel der Dauer eines binären Codierungsteiles relativ zu der dem Wert n2 entsprechenden lokalen Sequenz verschoben ist.

6. Verfahren nach einem der Ansprüche 2 bis 4,
dadurch gekennzeichnet, daß bei dem Verfahrensschritt der Ermittlung der Koinzidenz drei Korrelationswerte n1, n2, n3 berücksichtigt werden, die mittels dreier lokaler Sequenzen erzielt werden, welche um ein Viertel der Dauer eines binären Codierungsteiles relativ zueinander verschoben sind, wobei diese lokalen Sequenzen bis zur Erzielung eines Minimalwertes für die Funktion 1-n2/(n3-n1) verschoben werden, und wobei eine lokale Pilotsequenz erzeugt wird, die um ein Viertel der Dauer eines binären Codierungsteiles relativ zu der dem Wert n3 entsprechenden lokalen Sequenz verschoben ist.

7. Verfahren nach einem der Ansprüche 2 bis 4,
dadurch gekennzeichnet, daß bei dem Verfahrensschritt der Ermittlung der Koinzidenz drei Korrelationswerte n1, n2, n3 verwendet werden, die mittels dreier lokaler Sequenzen erzielt werden, die um ein Viertel der Dauer eines binären Codierungsteiles relativ zueinander verschoben sind, und mit einem Rauschpegel n4, wobei die lokalen Sequenzen bis zur Erzielung eines Minimalwertes für die Funktion 1-(n2-n4)/(n3-n1) verschoben werden, und wobei eine lokale Pilotsequenz erzeugt wird, die um ein Viertel der Dauer eines binären Codierungsteiles relativ zu der dem Wert n3 entsprechenden lokalen Sequenz verschoben ist.

8. Verfahren nach einem der Ansprüche 2 bis 7,
dadurch gekennzeichnet, daß ferner ein Verfahrensschritt vorgesehen ist, bei dem zur groben Ermittlung einer Koinzidenz zwischen einer empfangenen und einer lokalen Sequenz geprüft wird, ob durch die verschiedenen aktivierten Korrelationsfunktionen eine vorgegebene Störschwelle überschritten wird.

9. Verfahren nach einem der Ansprüche 1 bis 8,
gekennzeichnet durch die folgenden Verfahrensschritte:
- Am Ort der sekundären Sendeeinrichtung (216) Aussenden eines hochfrequenten Wellenzuges mit einem Signal, das durch ein Signal moduliert ist, welches die Fahrzeugposition repräsentiert, die von dem an Bord befindlichen Rechner (214) errechnet wurde, und
- am Ort der Bodenstationen (220) Empfangen und Demodulieren des hochfrequenten Wellenzuges zur Wiederherstellung des ursprünglichen Codierungssignals.

10. Verfahren nach einem der Ansprüche 1 bis 9,
dadurch gekennzeichnet, daß der Zeitraster, der einerseits von dem sekundären Netz, das durch die sekundäre Sendeeinrichtung (216) und die festen Empfangsstationen (220) gebildet ist, und andererseits von dem Hauptnetz genutzt und geteilt wird, das aus den Referenzbaken (200) und der Hauptkommunikationseinrichtung (212) besteht, auf eine Zeitbasis des aus den Referenzbaken (200) und der Hauptkommunikationseinrichtung (212) bestehenden Hauptnetzes abgestimmt ist.

11. Verfahren nach einem der Ansprüche 1 bis 9,
dadurch gekennzeichnet, daß der von der sekundären Sendeeinrichtung (216) und der Hauptkommunikationseinrichtung (212) genutzte und geteilte Zeitraster auf eine Zeitbasis außerhalb des Übertragungssystems der Referenzbaken (200) und der Hauptkommunikationseinrichtung (212) abgestimmt ist.

12. Verfahren nach Anspruch 11,
dadurch gekennzeichnet, daß der Zeitraster, der von der sekundären Sendeeinrichtung (216) und der Hauptkommunikationseinrichtung (212) genutzt und geteilt wird, auf die Zeitbasis eines GPS-Systems abgestimmt ist.

13. Verfahren nach Anspruch 12,
dadurch gekennzeichnet, daß das Verfahren zum Verwalten von Fahrzeugen dient, die mit unterschiedlichen Ortungssystemen ausgerüstet sind, welche jeweils eine sekundäre Sendeeinrichtung (216) aufweisen.

14. Verfahren nach einem der Ansprüche 1 bis 13,
dadurch gekennzeichnet, daß die sekundären Sendeeinrichtungen (216) eine einseitige Übertragung in einer Richtung vom Fahrzeug (210) zu den Bodenstationen (220) bestimmen.

15. Verfahren nach einem der Ansprüche 1 bis 14,
dadurch gekennzeichnet, daß die Taktfrequenz der Abstrahlung der sekundären Sendeeinrichtungen (216) von einem Fahrzeug zum anderen Fahrzeug variiert.

16. Verfahren nach einem der Ansprüche 1 bis 15,
dadurch gekennzeichnet, daß jeder der an Bord eines Fahrzeuges (210) befindlichen sekundären Sendeeinrichtungen (216) Übertragungsimpulse exklusiv zugeteilt sind.

17. Verfahren nach einem der Ansprüche 1 bis 16,
dadurch gekennzeichnet, daß der von der sekundären Sendeeinrichtung (216) genutzte Zeitraster in verschiedene Formate unterteilt ist, die ihrerseits aus mehreren Übertragungsimpulsen zusammengesetzt sind.

18. Verfahren nach einem der Ansprüche 1 bis 16,
dadurch gekennzeichnet, daß die Modulation am Ort der sekundären Sendeeinrichtungen (216) durch progressiven Frequenzübergang zwischen den numerischen Signalzuständen der Codierung erfolgt.

19. Verfahren nach Anspruch 18,
dadurch gekennzeichnet, daß der Übergang sinusförmig ist.

20. Verfahren nach einem der Ansprüche 1 bis 19,
dadurch gekennzeichnet, daß die von der sekundären Sendeeinrichtung (216) übertragenen Informationen verschlüsselt sind.

21. Verfahren nach einem der Ansprüche 1 bis 20,
dadurch gekennzeichnet, daß der zugeteilte Frequenzbereich in mehrere Kanäle unterteilt ist.

22. Vorrichtung zur Verwaltung einer Fahrzeugflotte, mit einem Funknavigationssystem, welches aufweist:
• Referenzbaken (200),
• eine an Bord jedes Fahrzeuges (210) befindliche Hauptkommunikationseinrichtung (212), wobei der Austausch zwischen den Referenzbaken (200) und der an Bord befindlichen Hauptkommunikationseinrichtung (212) auf der Basis von einem vorgegebenen Zeitraster entsprechenden Übertragungsimpulsen erfolgt, und
• einen an Bord jedes Fahrzeuges befindlichen und mit der Hauptkommunikationseinrichtung (212) verbundenen Rechner (214), mit dem die Position des Fahrzeuges in bezug auf die Referenzbaken (200) auf der Basis der von der Hauptkommunikationseinrichtung (212) gelieferten Informationen zu berechnen ist,
gekennzeichnet ferner durch
- ein Netz von festen Empfangsstationen (220) und
- eine an Bord jedes Fahrzeuges (210) befindliche sekundäre Sendeeinrichtung (216), die die Information, die aufgrund des an Bord befindlichen Rechners (214) die berechnete Position des Fahrzeuges wiedergibt, auf die Stationen (220) mittels Modulation eines Signals während der Übertragungsimpulse überträgt, die den zwischen den Referenzbaken (200) und der Hauptkommunikationseinrichtung (212) ausgetauschten Ortungsimpulsen ähneln und in demselben Zeitraster und Frequenzbereich liegen wie diese.

23. System nach Anspruch 22,
dadurch gekennzeichnet, daß der Zeitraster, der einerseits von dem sekundären Netz, das durch die sekundäre Sendeeinrichtung (216) und die festen Empfangsstationen (220) gebildet ist, und andererseits von dem Hauptnetz genutzt und geteilt wird, das aus den Referenzbaken (200) und der Hauptkommunikationseinrichtung (212) besteht, auf eine Zeitbasis des aus den Referenzbaken (200) und der Hauptkommunikationseinrichtung (212) bestehenden Hauptnetzes abgestimmt ist.

24. System nach Anspruch 22,
dadurch gekennzeichnet, daß der von der sekundären Sendeeinrichtung (216) und der Hauptkommunikationseinrichtung (212) genutzte und geteilte Zeitraster auf eine Zeitbasis außerhalb des Übertragungssystems der Referenzbaken (200) und der Hauptkommunikationseinrichtung (212) abgestimmt ist.

25. System nach Anspruch 24,
dadurch gekennzeichnet, daß der Zeitraster, der von der sekundären Sendeeinrichtung (216) und der Hauptkommunikationseinrichtung (212) genutzt und geteilt wird, auf die Zeitbasis eines GPS-Systems abgestimmt ist.

26. System nach Anspruch 25,
dadurch gekennzeichnet, daß das System zum Verwalten von Fahrzeugen dient, die mit unterschiedlichen Ortungssystemen ausgerüstet sind, welche jeweils eine sekundäre Sendeeinrichtung (216) aufweisen.

27. System nach einem der Ansprüche 22 bis 26,
dadurch gekennzeichnet, daß die sekundären Sendeeinrichtungen (216) eine einseitige Übertragung in einer Richtung zu den festen Bodenstationen (220) bestimmen.

28. System nach einem der Ansprüche 22 bis 27,
dadurch gekennzeichnet, daß die Taktfrequenz der Abstrahlung der sekundären Sendeeinrichtungen (216) von einem Fahrzeug (210) zum anderen Fahrzeug variiert.

29. System nach einem der Ansprüche 22 bis 28,
dadurch gekennzeichnet, daß die sekundäre Sendeeinrichtung (216) einen hochfrequenten Wellenzug mit einem Signal aussendet, das durch ein Signal moduliert ist, welches die Fahrzeugposition repräsentiert, die von dem an Bord befindlichen Rechner (214) errechnet wurde, und daß die Bodenstationen (220) den hochfrequenten Wellenzug empfangen und demodulieren, um das ursprüngliche Codierungssignal wiederherzustellen.

30. System nach einem der Ansprüche 22 bis 29,
dadurch gekennzeichnet, daß jeder der an Bord eines Fahrzeuges (210) befindlichen sekundären Sendeeinrichtungen (216) Übertragungsimpulse exklusiv zugeteilt sind.

31. System nach einem der Ansprüche 22 bis 30,
dadurch gekennzeichnet, daß der von der sekundären Sendeeinrichtung (216) genutzte Zeitraster in verschiedene Formate unterteilt ist, die ihrerseits aus mehreren Übertragungsimpulsen zusammengesetzt sind.

32. System nach einem der Ansprüche 22 bis 31,
dadurch gekennzeichnet, daß die Modulation am Ort der sekundären Sendeeinrichtung (216) durch progressiven Frequenzübergang zwischen den numerischen Signalzuständen der Codierung erfolgt.

33. System nach Anspruch 32,
dadurch gekennzeichnet, daß der Übergang sinusförmig ist.

34. System nach einem der Ansprüche 22 bis 33,
dadurch gekennzeichnet, daß der zugeteilte Frequenzbereich in mehrere Kanäle unterteilt ist.

35. System nach einem der Ansprüche 22 bis 34,
dadurch gekennzeichnet, daß die von der sekundären Sendeeinrichtung (216) übertragenen Informationen verschlüsselt sind.

36. System nach einem der Ansprüche 22 bis 35,
bei dem jede Referenzbake (200) einen Sender hat, der einen hochfrequenten Wellenzug mit einem sinusförmigen Signal aussendet, das durch Phasenumkehr gemäß einer ersten wiederholten Verkettung einer bekannten pseudozufälligen Sequenz moduliert ist, wodurch eine erste Zeitbasis bestimmt ist, und bei dem jede an Bord eines Fahrzeuges (210) befindliche Hauptkommunikationseinrichtung (212) einen Empfänger hat, der den hochfrequenten Wellenzug empfängt und demoduliert durch Korrelation der ersten wiederholten Verkettung der bekannten pseudozufälligen Sequenz, die, von dem hochfrequenten Wellenzug getragen, mit einer lokalen zweiten wiederholten Verkettung einer pseudozufälligen Sequenz empfangen wird, wobei die zweite wiederholte Verkettung zeitlich verschoben wird, bis sie mit der empfangenen ersten wiederholten Verkettung übereinstimmt, so daß eine zweite Zeitbasis bestimmt ist, die von der Laufzeit der elektromagnetischen Welle vom Sender zum Empfänger und somit von der Entfernung zwischen Sender und Empfänger abhängt,
dadurch gekennzeichnet, daß jede an Bord befindliche Hauptkommunikationseinrichtung (212) eine Einrichtung (112, 113) zum Ermitteln einer Koinzidenz zwischen der ersten und der zweiten wiederholten Verkettung durch Mehrstellen-Amplitudenmessung der Korrelationsfunktion aufweist, um die Form der Vorderflanke des Korrelationspeaks zu bestimmen.

37. System nach Anspruch 36,
dadurch gekennzeichnet, daß jede Hauptkommunikationseinrichtung (212) folgende Einrichtungen aufweist: eine Einrichtung (112) zur Berücksichtigung unterschiedlicher Korrelationswerte, die von einem bekannten binären Codierungsteil der pseudozufälligen Sequenz getrennt sind, eine Einrichtung (103) zum Verschieben der lokalen Sequenz bis zum Erhalt eines vorgegebenen Wertes für eine Funktion zur Aktivierung dieser Werte und eine Einrichtung (105) zum Erzeugen einer lokalen Pilotsequenz, die um einen bekannten Wert relativ zu den berücksichtigten Werten der Korrelationsfunktion verschoben ist.

38. System nach einem der Ansprüche 36 oder 37,
dadurch gekennzeichnet, daß jede an Bord befindliche Hauptkommunikationseinrichtung (212) folgende Einrichtungen aufweist: eine Einrichtung (105) zum Erzeugen mehrerer wiederholter lokaler Verkettungen, die jeweils um einen bekannten Bruchteil eines binären Teiles relativ zu der pseudozufälligen Sequenz verschoben sind, eine Einrichtung (1120) zum Korrelieren einer ersten empfangenen Verkettung mit jeder wiederholten lokalen verschobenen Verkettung und eine Einrichtung (113, 103) zum Verschieben der lokalen Verkettungen, bis ein vorgegebener Wert für eine Funktion erreicht ist, die die erreichten Werte für die verschiedenen Korrelationsfunktionen aktiviert.

39. System nach einem der Ansprüche 36 bis 38,
dadurch gekennzeichnet, daß jede Hauptkommunikationseinrichtung (212) folgende Einrichtungen aufweist: eine Einrichtung zum Messen von zwei Korrelationswerten n1, n2, die mittels zweier lokaler Sequenzen erhalten sind, welche zueinander um ein Viertel der Dauer eines binären Codierungsteiles verschoben sind, eine Einrichtung (103, 113) zum Verschieben dieser Sequenzen bis zur Erzielung eines Minimalwertes für die Funktion 2-n1/(n2-n1) und eine Einrichtung zum Erzeugen einer lokalen Pilotsequenz, die um ein Viertel der Dauer eines binären Codierungsteiles relativ zu der dem Wert n2 entsprechenden lokalen Sequenz verschoben ist.

40. System nach einem der Ansprüche 36 bis 38,
dadurch gekennzeichnet, daß jede Hauptkommunikationseinrichtung (212) folgende Einrichtungen aufweist: eine Einrichtung zum Messen von drei Korrelationswerten n1, n2, n3, die mittels dreier lokaler Sequenzen erzielt werden, welche um ein Viertel der Dauer eines binären Codierungsteiles relativ zueinander verschoben sind, eine Einrichtung (103, 113) zum Verschieben dieser lokalen Sequenzen bis zur Erzielung eines Minimalwertes für die Funktion 1-n2/(n3-n1) und eine Einrichtung zum Erzeugen einer lokalen Pilotsequenz, die um ein Viertel der Dauer eines binären Codierungsteiles relativ zu der dem Wert n3 entsprechenden lokalen Sequenz verschoben ist.

41. System nach einem der Ansprüche 36 bis 38,
dadurch gekennzeichnet, daß jede Hauptkommunikationseinrichtung (212) folgende Einrichtungen aufweist: eine Einrichtung zum Messen von drei Korrelationswerten n1, n2 und n3, die mittels dreier lokaler Sequenzen erzielt werden, die um ein Viertel der Dauer eines binären Codierungsteiles relativ zueinander verschoben sind, sowie einen Rauschpegel n4, eine Einrichtung (103, 113) zum Verschieben dieser lokalen Sequenzen bis zur Erzielung eines Minimalwertes für die Funktion 1-(n2-n4)/(n3-n1) und eine Einrichtung zum Erzeugen einer lokalen Pilotsequenz, die um ein Viertel der Dauer eines binären Codierungsteiles relativ zu der dem Wert n3 entsprechenden lokalen Sequenz verschoben ist.

42. System nach einem der Ansprüche 36 bis 39,
gekennzeichnet ferner durch eine Einrichtung (113) zur groben Ermittlung einer Koinzidenz zwischen einer empfangenen und einer lokalen Sequenz, wobei von der Einrichtung geprüft wird, ob durch die verschiedenen aktivierten Korrelationsfunktionen eine vorgegebene Störschwelle überschritten wird.

## Claims

1. A radiolocation method of the type comprising the following steps:
• generating reference signals by means of reference beacons (200);
• detecting reference signals by main communications means (212) on board respective vehicles (210) with interchanges between the reference beacons (200) and the main communications means (216) being established on the basis of transmission slots satisfying a preestablished time frame; and
• using computation means (214) on board each vehicle (210) and connected to the main communications means (212) to compute the position of each vehicle relative to the reference beacons (200) on the basis of information from the main communications means (212);
the method being characterized in that it further includes the steps of:
• using secondary transmission means (216) on board each vehicle to transmit information to a network of stationary receiver stations (220), said information representing the position of each vehicle as computed by the on board computation means (214), the information being transmitted by modulating a signal during transmission slots similar to the localizing slots interchanged between the reference beacons (200) and the main communications means (212), and sharing therewith the same time frame and the same frequency band.

2. A method according to claim 1, characterized by the fact that it further includes the steps consisting in:
• at a transmitter, radiating a high frequency wave train comprising a sinewave signal modulated by phase inversion in application of a first repetitive chain of a known pseudo-random sequence defining a first time base; and
• at a receiver, receiving the high frequency wave train and demodulating it by correlation between the first repetitive chain of the known pseudo-random sequence as received, carried by the high frequency wave train, and a local second repetitive chain of a pseudo-random sequence, said second repetitive chain being shifted in time until it coincides with the first repetitive chain as received, thereby defining a second time base associated with the propagation time of the electromagnetic wave from the transmitter to the receiver, and thus to the distance between the transmitter and the receiver;
the method being characterized by the fact that continuing coincidence (112, 113) between the first and second repetitive chains is achieved by measuring multipoint amplitude on the correlation function in order to determine the waveform of the front prior to the peak correlation.

3. A method according to claim 2, characterized by the fact that the step of tracking coincidence is performed by taking different correlation levels separated by a known fraction of a binary code element of the pseudo-random sequence by shifting the local sequence until a predetermined value is obtained for a function implementing said levels, and by generating a driving local sequence that is offset by a known value from the levels taken into consideration of the correlation function.

4. A method according to claim 2 or 3, characterized by the fact that coincidence is tracked by correlating a first received chain with a plurality of local repetitive chains that are offset by respective known fractions of a binary element of the pseudo-random sequence, and by shifting the local chains until a predetermined value is obtained for a function implementing the levels obtained for the various correlation functions.

5. A method according to any of claims 2 to 4, characterized by the fact that coincidence is tracked by taking account of two correlation levels n1 and n2 obtained by means of two local sequences that are mutually offset by one-fourth of the duration of a binary code element, by shifting said sequences until a minimum is obtained for the function: 2-n1/(n2-n1), and by generating a local driving sequence that is offset by one-fourth of the duration of a coding binary element relative to the local sequence corresponding to level n2.

6. A method according to any of claims 2 to 4, characterized by the fact that the step of tracking coincidence is performed by taking account of three correlation levels n1, n2, and n3 obtained by means of three local sequences that are offset from one another by one-fourth of the duration of a coding binary element, by shifting said local sequences until a minimum is obtained for the function: 1-n2/(n3-n1), and by generating a local driving sequence that is offset by one-fourth of the duration of an encoding binary element relative to the local sequence corresponding to level n3.

7. A method according to any of claims 2 to 4, characterized by the fact that the step of tracking coincidence is performed by taking three correlation levels n1, n2, and n3 obtained by means of three local sequences offset from one another by one-fourth of the duration of an encoding binary element, and a noise level n4, by shifting the local sequences until a minimum is obtained for the function: 1-(n2-n4)/(n3-n1), and by generating a local driving sequence offset by one-fourth of the duration of an encoding binary element relative to the local sequence corresponding to level n3.

8. A method according to any of claims 2 to 7, characterized by the fact that it further comprises a step of coarsely seeking coincidence between a received sequence and a local sequence by detecting when the various correlation functions implemented exceed a predetermined noise threshold.

9. A method according to any of claims 1 to 8, characterized by the fact that it includes the steps consisting in:
• at the secondary transmission means (216) radiating a high frequency wave train comprising a signal modulated by a signal representative of the position of the vehicle as computed by the on-board computation means (214); and
• at the ground stations (220), receiving the high frequency wave train and demodulating it to recover the initial encoding signal.

10. A method according to any of claims 1 to 9, characterized by the fact that the time frame used and shared both by the secondary network formed by the secondary transmission means (216) and the stationary receiver stations (220) and also by the main network composed of the reference beacons (200) and the main communications means (212) is synchronized on a time base specific to the main network made up of the reference beacons (200) and of the main communications means (212).

11. A method according to any of claims 1 to 9, characterized by the fact that the time frame used and shared by the secondary transmission means (216) and the main communications means (212) is synchronized on a time base external to the transmission system of the reference beacons (200) and of the main communications means (212).

12. A method according to claim 11, characterized by the fact that the time frame used and shared by the secondary transmission means (216) and by the main communications means is synchronized on the time base of a GPS system.

13. A method according to claim 12, characterized by the fact that it controls vehicles fitted with different localization means, each provided with secondary transmission means (216).

14. A method according to any of claims 1 to 13, characterized by the fact that the secondary transmission means (216) define one-way transmission in the vehicle (210) to ground station (220) direction.

15. A method according to any one claims 1 to 14, characterized by the fact that the frequency at which transmissions are repeated by the secondary transmission means (216) differs from one vehicle to another.

16. A method according to any of claims 1 to 15, characterized by the fact that a transmission slot is allocated exclusively to each of the secondary transmission means (216) on board respective vehicles (210).

17. A method according to any of claims 1 to 16, characterized by the fact that the time frame used by the secondary transmission means (216) is divided into a plurality of formats themselves made up of pluralities of slots.

18. A method according to any of claims 1 to 16, characterized by the fact that modulation is performed at the secondary transmission means (216) by progressive frequency transition between digital signal states representing the coding.

19. A method according to claim 18, characterized by the fact that transition is of the sinusoidal type.

20. A method according to any of claims 1 to 19, characterized by the fact that the information transmitted by the secondary transmission means (216) is encrypted.

21. A method according to any one to claims 1 to 20, characterized by the fact that the allocated frequency band is subdivided into a plurality of channels.

22. A system for managing a fleet of vehicles, the system comprising:
• a radionavigation system including:
• reference beacons (200);
• main communications means (212) on board respective vehicles (210), interchanges between the reference beacons (200) and the on-board main communications means (210) being established on the basis of transmission slots complying with a preestablished time frame; and
• computation means (214) on board respective vehicles and connected to the main communications means (212), which computation means (214) are adapted to compute the position of the vehicle relative to the reference beacons (200) on the basis of information from the main communications means (212);
the system being characterized by the fact that it further comprises:
• an array of stationary receiver stations (220); and
• secondary transmission means (216) on board each vehicle (210) and adapted to transmit information to the stations (220), which information represents the position of the vehicle as computed by the on-board computation means (214), transmission being by modulating the signal in transmission slots similar to the localization slots interchanged between the reference beacons (200) and the main communications means (212), and sharing therewith the same time frame and the same frequency band.

23. A system according to claim 22, characterized by the fact that the time frame used and shared both by the secondary network formed by the secondary transmission means (216) and the stationary receiver stations (220), and by the main network made up of the reference beacons (200) and the main communications means (212) is synchronized on a time base belonging to the main network made up of the reference beacons (200) and the main communications means (212).

24. A system according to claim 22, characterized by the fact that the time frame used and shared by the secondary transmission means (216) and the main communications means (212) is synchronized on a time base external to the transmission system of the reference beacons (200) and of the main communications means (212).

25. A system according to claim 24, characterized by the fact that the time frame used and shared by the secondary transmission means (216) and the main communications means (212) is synchronized on the time base of a GPS system.

26. A system according to claim 25, characterized by the fact that it manges vehicles fitted with different localization systems and each provided with secondary transmission means (216).

27. A system according to any of claims 22 to 26, characterized by the fact that the secondary transmission means (216) define one-way transmission towards the stationary ground stations (220).

28. A system according to any of claims 22 to 27, characterized by the fact that the repetition frequency of transmission by the secondary transmission means (216) is different from one vehicle (210) to another.

29. A system according to any of claims 22 to 28, characterized by the fact that the secondary transmission means (216) radiate a high frequency wave train comprising a signal modulated by a signal representative of the position of the vehicle as computed by the on-board computation means (214), and the ground stations (220) receive the high frequency wave train and demodulate it to recover the initial encoding signal.

30. A system according to any of claims 22 to 29, characterized by the fact that a transmission slot is allocated exclusively to each of the secondary transmission means (216) on board respective vehicles (210).

31. A system according to any of claims 22 to 30, characterized by the fact that the time frame used by the secondary transmission means (216) is subdivided into different formats themselves made up of a plurality of slots.

32. A system according to any of claims 22 to 31, characterized by the fact that the modulation at the secondary transmission means (216) is performed by progressive frequency transition between the states of the digital signals representing the encoding.

33. A system according to claim 32, characterized by the fact that the transition is of the sinusoidal type.

34. A system according to any of claims 22 to 33, characterized by the fact that the allocated frequency band is subdivided into a plurality of channels.

35. A system according to any of claims 22 to 34, characterized by the fact that the information transmitted by each of the secondary transmission means (216) is encrypted.

36. A system according to any of claims 22 to 35, in which each reference beacon (200) possesses a transmitter which radiates a high frequency wave train comprising a sinusoidal signal modulated by phase inversion in application of a first repetitive chain of a known pseudo-random sequence, defining a first time base, and each main communications means (212) on board a vehicle (210) comprises a receiver which receives the high frequency wave train and demodulates it by correlating the first repetitive chain of the known pseudo-random sequence as received and carried by the high frequency wave train with a local second repetitive chain of a pseudo-random sequence, said second repetitive chain being shifted in time until it coincides with the first repetitive chain as received, thereby defining a second time base associated with the propagation time of the electromagnetic wave from the transmitter to the receiver, and thus to the distance between the transmitter and the receiver, the system being characterized by the fact that each on-board main communications means (212) includes means (112, 113) for tracking coincidences between the first and second repetitive chains by multipoint amplitude measurement on the correlation function in order to determine the shape of the front before the correlation peak.

37. A system according to claim 36, characterized by the fact that each main communications means (212) comprises means (112) for taking account of the various correlation levels separated by a known fraction of an encoding binary element of the pseudo-random sequence, shifting means (103) for shifting the local sequence until a predetermined value is obtained for a function implementing said levels, and means (105) for generating a driving local sequence that is offset by a known value relative to the levels under consideration of the correlation function.

38. A system according to claim 36 or 37, characterized by the fact that each on board main communications means (212) comprises means (105) for generating a plurality of local repetitive chains respectively offset by a known fraction of a binary element of the pseudo-random sequence, means (1120) for correlating a first received chain with each of the shifted local repetitive chains, respectively, and means (113, 103) for shifting the local chains until a predetermined value is obtained for a function enabling the levels obtained for said various correlation functions to be implemented.

39. A system according to any of claims 36 to 38, characterized by the fact that each main communications means (212) comprises means for measuring two correlation levels n1, n2 obtained by means of two local sequences mutually offset by one-fourth of the duration of an encoding binary element, means (103, 113) for shifting said sequences until a minimum is obtained for the function: 2-n1/(n2-n1), and means for generating a local driving sequence that is offset by one-fourth of the duration of an encoding binary element relative to the local sequence corresponding to level n2.

40. A system according to any of claims 36 to 38, characterized by the fact that each main communications means (212) comprises means for measuring three correlation levels n1, n2, n3 obtained by three local sequences that are offset from one another by one-fourth of the duration of an encoding binary element, means (103, 113) for shifting said local sequences until a minimum is obtained for the function: 1-n2/(n3-n1) and means for generating a local driving sequence that is offset by one-fourth the duration of an encoding binary element relative to the local sequence corresponding to level n3.

41. A system according to any of claims 36 to 38, characterized by the fact that each main communications means (212) comprises means for measuring three correlation levels n1, n2, and n3, obtained using three local sequences that are offset from one another by one-fourth of the duration of an encoding binary element, and a noise level n4, means (103, 113) for shifting said local sequences until a minimum is obtained for the function: 1-(n2-n4)/(n3-n1), and means for generating a local driving sequence offset by one-fourth of the duration of an encoding binary element relative to the local sequence corresponding to level n3.

42. A system according to any of claims 36 to 39, characterized by the fact that it further comprises means (113) for coarsely seeking coincidence between a received sequence and a local sequence by detecting when a predetermined noise threshold is exceeded by the various correlation functions implemented.
